# EUROPEAN PATENT SPECIFICATION

(11) **EP 3 089 536 B1**
(45) Date of publication and mention of the grant of the patent: **14.12.2022**
(21) Application number: 14792107.6
(22) Date of filing: 22.05.2014
(51) Int. Cl.: H04W 72/08, H04L 1/06

(54) **INTERFERENCE PROCESSING METHOD, DEVICE, NETWORK CONTROL UNIT AND TERMINAL**
INTERFERENZVERARBEITUNGSVERFAHREN, VORRICHTUNG, NETZWERKSTEUERUNGSEINHEIT UND ENDVORRICHTUNG
DISPOSITIF, PROCÉDÉ DE TRAITEMENT DE BROUILLAGE, UNITÉ DE COMMANDE DE RÉSEAU ET TERMINAL

(30) Priority: 26.12.2013 CN 201310733202
(43) Date of publication of application: 02.11.2016
(73) Proprietor: ZTE Corporation, Shenzhen, Guangdong 518057 (CN)
(72) Inventor: GONG, Yuhong, Shenzhen Guangdong 518057 (CN); SUN, Yunfeng, Shenzhen Guangdong 518057 (CN); WANG, Yuxin, Shenzhen Guangdong 518057 (CN); WU, Huaming, Shenzhen Guangdong 518057 (CN)
(74) Representative: Novagraaf Technologies
(86) International application number: PCT/CN2014/078181
(87) International publication number: WO 2014/177094

(56) References cited:
- CN-A- 101 179 821
- CN-A- 101 686 550
- CN-A- 101 754 346
- BROADCOM CORPORATION: "Discussion on Coordination and Signaling in NAICS", 3GPP DRAFT; R1-134592 BRCM NAICS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717684, Retrieved from the Internet: URL:http://www.3gpp.org/ftp/tsg_ran/WG1_RL 1/TSGR1_74b/Docs/ [retrieved on 2013-09-28]
- HUAWEI ET AL: "Discussion on network coordination/signaling and specification impact for advanced receivers", 3GPP DRAFT; R1-135017, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050734720, Retrieved from the Internet: URL:http://www.3gpp.org/ftp/Meetings_3GPP_ SYNC/RAN/RAN1/Docs/ [retrieved on 2013-11-13]
- NSN ET AL: "On the NAICS system and specification impact", 3GPP DRAFT; R1-135838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735476, Retrieved from the Internet: URL:http://www.3gpp.org/ftp/Meetings_3GPP_ SYNC/RAN/RAN1/Docs/ [retrieved on 2013-11-13]
- INTEL CORPORATION: "Discussion on interference parameters signalling and detection for NAICS", 3GPP DRAFT; R4-136207 - INTEL - NAICS INTERFERENCE PARAMETERS DETECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG4, no. San Francisco, CA, US; 20131111 - 20131115 4 November 2013 (2013-11-04), XP050756714, Retrieved from the Internet: URL:http://www.3gpp.org/ftp/tsg_ran/WG4_Ra dio/TSGR4_69/Docs/ [retrieved on 2013-11-04]

## Description

### Technical Field

The present disclosure relates to the field of communication, and in particular to a method and device for processing interference, a network control unit and User Equipment (UE).

### Background

Inter-cell interference is an inherent problem of a cellular mobile communication system, and a conventional solution is to adopt frequency multiplex and enable neighboring cells to use different carrier frequencies to solve the problem of interference between the neighboring cells. In an Orthogonal Frequency Division Multiplexing (OFDM) system, when a frequency multiplexing factor is 1, that is, neighboring cells use the same carrier frequency, the problem of inter-cell interference may be more complicated than that of a conventional frequency multiplexing system. A Long Term Evolution (LTE) system is an OFDM-technology-based system, and solves the problem of interference mainly by adopting inter-cell interference randomization and interference avoidance and coordination technologies, and the interference avoidance is implemented on a sending side in a manner of pre-coding, collaborative scheduling and the like on a network side. However, an interference collaboration-based method of a sending end largely depends on accuracy of Channel State Information (CSI) which is fed back. Under a overhead limit of a feedback signaling and delay influence of a feedback processing as well as great influence of the problem of delay of an overhaul, an effect of an inter-cell collaboration is affected greatly, a conventional interference collaboration-based method of the sending end in an LTE system may not completely solve the problem of interference, and how to effectively cancel and suppress interference between cells and users is an important direction for subsequently further effectively improving spectral efficiency.

In an LTE system, a Common Reference Signal (CRS) is adopted for pilot measurement and data demodulation, that is, all users perform channel estimation by virtue of CRSs. When a CRS-based pre-coding processing manner is adopted, a sending end is required to additionally notify a receiving end of specific pre-coding matrix (also called pre-coding weight) information adopted for data sending, and moreover, pilot overhead is relatively high. In addition, in a Multi-user Multi-input Multi-output (MU-MIMO) system, multiple pieces of UE use the same CRS, resulting that pilot orthogonality may not be achieved, and interference may not be estimated.

In an Advanced Long Term Evolution (LTE-A) system, in order to reduce pilot overhead and improve the accuracy of the channel estimation, the pilot measurement function and the data demodulation function are separated and two types of reference signals are defined, i.e. a Demodulation Reference Signal (DMRS) and a Channel State Information Reference Signal (CSI-RS), wherein the CSI-RS is mainly used for performing channel measurement to obtain and feed back Channel Quality Information (CQI) for an evolved Node B side to implement user scheduling and implement adaptive allocation of a Modulation and Coding Scheme (MCS) by virtue of the CQI, and no pre-coding information is contained during transmission of the CSI-RS; and the DMRS is mainly used for performing channel estimation of a Physical Downlink Shared Channel (PDSCH) and an Enhanced Physical Downlink Control Channel (ePDCCH) to implement data/control channel demodulation, and pre-coding information of the corresponding PDSCH/ePDCCH is contained during transmission of the DMRS. LTE and LTE-A systems may be divided into Frequency Division Duplex (FDD) system and Time Division Duplex (TDD) system according to different uplink and downlink duplex manners, and CSI-RS pattern and DMRS pattern of the FDD system and the TDD system may be different.

In researches on advanced receivers of receiving ends, the advanced receivers may be divided into the following main types: a Minimum Mean Square Error-Interference Rejection Combining (MMSE-IRC) receiver, an Interference Cancellation (IC) receiver and a Maximum Likelihood (ML) receiver.

For an MMSE-IRC receiver (which is supposed to be DMRS-based), a network side is required to provide information of an DMRS port and DMRS initialization parameter (including a scrambling Identity (ID), a virtual cell ID, a physical cell ID and the like) adopted by interference UE for victim UE; and for IC receiver and ML receiver, the network side is required to provide modulation manner or MCS information of an interference source, besides the abovementioned information required by the MMSE-IRC receiver. Thus it can be seen that transmission of these information through an inter-cell X2 interface and an air interface may cause high X2 signaling overhead and air interface signaling overhead as well as a great delay to finally make it difficult to apply an advanced receiver technology to a practical system. Particularly under a non-ideal backhaul network condition, a transmission delay between nodes is relatively great, and a dynamic parameter such as information of the DMRS port, a modulation manner or an MCS is unsuitable to be transmitted in an X2 interface under the non-ideal backhaul condition.

Therefore, there exist the problems of high signaling overhead and great delay during acquisition of IC information, required by an advanced receiver, of victim UE in a related art.

Document "BROADCOM CORPORATION: 'Discussion on Coordination and Signaling in NAICS', 3GPP TSG RAN WG1 Meeting #74bis, R1-134592 (XP050717684)", document "HUAWEI ET AL: 'Discussion on network coordination/signalling and specification impact for advanced receivers', 3GPP TSG WG1 Meeting #75, R1-135017 (XP050734720)", document "NSN ET AL: 'On the NAICS system and specification impact', 3GPP TSG RAN WG1 Meeting #75; R1-135838 (XP050735476)" and document "INTEL CORPORATION: 'Discussion on interference parameters signalling and detection for NAICS', 3GPP TSG-RAN WG4 Meeting #69, R4-136207 (XP050756714)" provide related technical solutions; however, the above mentioned problem still remains unsolved.

Document "HUAWEI et al: 'Discussion on network coordination/signaling and specification impact for advanced receivers', 3GPP Draft; R1-135017, 3rd Generation Partnership Project (3GPP), Mobile Competence Centre; 650, Route des Lucioles; F-06921 Sophia-Antipolis Cedex; France" is also related art.

### Summary

The invention is defined by methods for processing interference and a system and user equipment corresponding to the methods according to the appended independent claims. Further embodiments are defined by the dependent claims. Embodiments described herein which are not covered by the claims may be useful for understanding the invention.

The present disclosure provides a method and device for processing interference, a network control unit and UE, so as to at least solve the problems of high signaling overhead and great delay during acquisition of IC information, required by an advanced receiver, of victim UE in the related art.

According to one aspect of the present disclosure, a method for processing interference is provided, comprising: sending downlink transmission parameter indication information of a second User Equipment ,UE, to a first UE through a Physical Downlink Shared Channel (PDSCH), wherein the second UE belongs to a second access node and the first UE, which belongs to the first access node, performs Interference Cancellation, IC, processing according to the received downlink transmission parameter indication information;
wherein sending the downlink transmission parameter indication information of the second UE to the first UE through the PDSCH, comprises: sending the downlink transmission parameter indication information to the first UE in a manner of bearing the downlink transmission parameter indication information of the second UE in a Radio Resource Control, RRC, signaling in the PDSCH of the first access node, and a scrambling code used for representing the execution of IC is adopted to scramble the PDSCH of the first access node.

In an example embodiment, the downlink transmission parameter indication information comprises:
Transmission Mode, TM, information of the second UE and downlink transmission parameter configuration information of the second UE.

In an example embodiment, the downlink transmission parameter configuration information is determined according to the TM information of the second UE, wherein the downlink transmission parameter configuration information is determined according to the TM information of the second UE comprises:
when the TM information indicates TM1 or TM2, the downlink transmission parameter configuration information comprises: Energy Per Resource Element, EPRE, information of a Common Reference Signal, CRS;
when the TM information indicates TM3, the downlink transmission parameter configuration information comprises: the EPRE information of the CRS;
when the TM information indicates TM4 or TM6, the downlink transmission parameter configuration information comprises: the EPRE information of the CRS;
when the TM information indicates TM8/TM9/TM10, the downlink transmission parameter configuration information comprises: the EPRE information of the CRS in the non-MBSFN subframe.

In an example embodiment, when the first access node sends the downlink transmission parameter indication information to the first UE through the PDSCH of the first access node, the first access node adds corresponding cell ID indication information to the downlink transmission parameter indication information.

In an example embodiment, the downlink transmission parameter indication information further comprises:
cell ID indication information of the second access node and following CRS parameter information corresponding to the second access node: information of the number of antenna ports, configuration information of MBSFN subframes.

According to another aspect of the present disclosure, a method for processing interference is provided, comprising:
receiving, by a first User Equipment, UE, which belong to a first access node, downlink transmission parameter indication information of a second UE, sent by a network side through a Physical Downlink Shared Channel, PDSCH, wherein the second UE belongs to a second access node; and
performing Interference Cancellation, IC, processing, by the first UE, according to the received downlink transmission parameter indication information;
wherein receiving the downlink transmission parameter indication information, sent by the network side through the PDSCH, of the second UE of the second access node comprises: receiving the downlink transmission parameter indication information sent by the network side in a manner of bearing the downlink transmission parameter indication information of the second UE of the second access node in a Radio Resource Control, RRC, signaling in the PDSCH of the first access node, and a scrambling code used for representing the execution of IC is adopted to scramble the PDSCH of the first access node.

In an example embodiment, the downlink transmission parameter indication information comprises:
Transmission Mode, TM, information of the second UE and downlink transmission parameter configuration information of the second UE.

In an example embodiment, the downlink transmission parameter configuration information is determined according to the TM information of the second UE, wherein the downlink transmission parameter configuration information is determined according to the TM information of the second UE comprises:
when the TM information indicates TM1 or TM2, the downlink transmission parameter configuration information comprises Energy Per Resource Element, EPRE, information of a Common Reference Signal, CRS;
when the TM information indicates TM3, the downlink transmission parameter configuration information comprises the EPRE information of the CRS;
when the TM information indicates TM4 or TM6, the downlink transmission parameter configuration information comprises: the EPRE information of the CRS;
when the TM information indicates TM8/TM9/TM10, the downlink transmission parameter configuration information comprises: the EPRE information of the CRS in the non-MBSFN subframe.

In an example embodiment, the downlink transmission parameter indication information further comprises:
cell ID indication information of the second access node and following CRS parameter information corresponding to the second access node: information of the number of antenna ports, configuration information of MBSFN subframes.

According to an aspect of the present disclosure, a device for processing interference is provided, comprising:
a sending component, configured to send downlink transmission parameter indication information of a second User Equipment, UE, to a first UE through a Physical Downlink Shared Channel, PDSCH, wherein the second UE belongs to a second access node, and the first UE, which belongs to the first access node, performs Interference Cancellation, IC, processing according to the received downlink transmission parameter indication information;
wherein the sending component comprises: a first sending element, configured to send the downlink transmission parameter indication information to the first UE in a manner of bearing the downlink transmission parameter indication information of the second UE in a Radio Resource Control, RRC, signaling in the PDSCH of the first access node, and a scrambling code used for representing the execution of IC is adopted to scramble the PDSCH of the first access node.

According to an aspect of the present disclosure, a network control unit, comprising the above device is provided.

According to an aspect of the present disclosure, a first User Equipment, UE, for processing interference is provided, comprising:
a receiving component, configured to receive downlink transmission parameter indication information of a second UE, sent by a network side through a Physical Downlink Shared Channel, PDSCH, wherein the second UE belongs to a second access node and the first UE belongs to the first access node; and
a processing component, configured to perform Interference Cancellation, IC, processing according to the received downlink transmission parameter indication information;
wherein the receiving component comprises: a first receiving element, configured to receive the downlink transmission parameter indication information sent by the network side in a manner of bearing the downlink transmission parameter indication information of the second UE of the second access node in a Radio Resource Control, RRC, signaling in the PDSCH of the first access node, and a scrambling code used for representing the execution of IC is adopted to scramble the PDSCH of the first access node.ln an example embodiment, the receiving component comprises:
   an acquiring element, configured to acquire cell Identity, ID, indication information of the second UE of the second access node;
   a fourth receiving element, configured to receive downlink grant control signaling used for scheduling the PDSCH in the downlink control channel region of a cell indicated by the cell ID indication information, wherein the PDSCH is used for transmitting the downlink transmission parameter configuration information; and a fifth receiving element, configured to receive the downlink transmission parameter indication information on the PDSCH scheduled by the downlink grant control signaling.

The invention is defined by the embodiment 2. Other embodiments not covered by the claims are useful for understanding the invention.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a first method for processing interference according to an embodiment of the present disclosure;
Fig. 2 is a flowchart of a second method for processing interference according to an embodiment of the present disclosure;
Fig. 3 is a structure block diagram of a first device for processing interference according to an embodiment of the present disclosure;
Fig. 4 is a first structure block diagram of the sending component 32 in the first device for processing interference according to an embodiment of the present disclosure;
Fig. 5 is a second structure block diagram of the sending component 32 in the first device for processing interference according to an embodiment of the present disclosure;
Fig. 6 is a structure block diagram of a network control unit according to an embodiment of the present disclosure;
Fig. 7 is a structure block diagram of a second device for processing interference according to an embodiment of the present disclosure;
Fig. 8 is a first structure block diagram of the receiving component 72 in the second device for processing interference according to an embodiment of the present disclosure;
Fig. 9 is a second structure block diagram of the receiving component 72 in the second device for processing interference according to an embodiment of the present disclosure;
Fig. 10 is a third structure block diagram of the receiving component 72 in the second device for processing interference according to an embodiment of the present disclosure;
Fig. 11 is a structure block diagram of UE according to an embodiment of the present disclosure;
Fig. 12 is a diagram of interference of a wireless communication system according to an example embodiment of the present disclosure;
Fig. 13 is a flowchart of IC configuration according to an example embodiment of the present disclosure;
Fig. 14 is a diagram of a signaling design for network assisted IC according to an example embodiment of the present disclosure;
Fig. 15 is a diagram of a first manner for uplink transmission parameter configuration of an interference cell on each resource allocation unit according to an example embodiment of the present disclosure;
Fig. 16 is a processing flowchart of a first manner for downlink transmission configuration of an interference cell on each resource allocation unit according to an example embodiment of the present disclosure;
Fig. 17 is a diagram of a second manner for downlink transmission parameter configuration of an interference cell on each resource allocation unit according to an example embodiment of the present disclosure; and
Fig. 18 is a processing flowchart of a second manner for downlink transmission parameter configuration of an interference cell on each resource allocation unit according to an example embodiment of the present disclosure.

### Detailed Description of the Embodiments

The present disclosure will be described below with reference to the drawings and embodiments in detail. It is important to note that the embodiments in the present disclosure and characteristics in the embodiments may be combined under the condition of no conflicts.

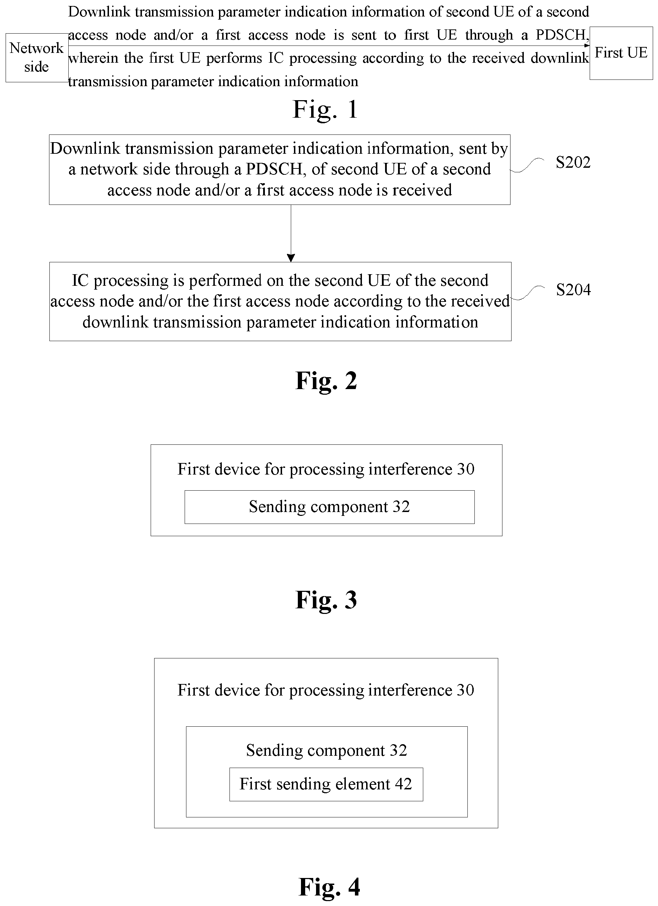

The embodiment provides a method for processing interference, and Fig. 1 is a flowchart of a first method for processing interference according to an embodiment of the present disclosure. As shown in Fig. 1, it is important to note at first that first UE refers to victim UE, a cell to which a first access node belongs refers to a serving cell of the first UE, second UE is interference UE of the first UE, and a cell to which a second access node belongs refers to an interference cell of the first UE, that is, the interference UE of the first UE exists in a cell to which the second access node belongs. Particularly, when there exists a paired user of the victim UE in a cell to which the first UE belongs, the paired user may produce interference to the victim UE, and under such a condition, the interference UE may also exist in the cell where the first access node is located. For specific first UE, there may exist at least one second node and there may also exist at least one piece of second UE, so that the second UE mentioned herein is a general term of UE such as the interference UE of the victim UE, and the second node is also a general term of a node such as an interference node of the victim UE. The flow includes the following step:
Step 102: downlink transmission parameter indication information of second UE is sent to first UE through a PDSCH, wherein the second UE belongs to a second access node and/or a first access node, the first UE performs IC processing according to the received downlink transmission parameter indication information, and the downlink transmission parameter indication information may include multiple kinds of information, and for example, may include at least one of: indication information indicating whether there is the second UE or not, TM information of the second UE and downlink transmission parameter configuration information of the second UE.

By the step, for a network side, downlink parameter indication information of interference UE and interference neighboring cell of a cell to which the first UE belongs is sent to the first UE through the PDSCH, and compared with the related art of sending IC parameter information through an inter-cell X2 interface, such a manner has the advantages that the problems of high signaling overhead and great delay during acquisition of IC information, required by an advanced receiver, of the first UE in the related art are solved, and the effects of reducing signaling overhead and improving system performance are further achieved.

The downlink transmission parameter indication information may be born in independent resource allocation units respectively: for example, when the indication information indicating whether there is the second UE or not indicates that there is no the second UE on a current resource allocation unit, the downlink transmission parameter indication information corresponding to the current resource allocation unit does not include the TM information and/or the downlink transmission parameter configuration information of the second UE; and for another example, when the indication information indicating whether there is the second UE or not indicates that there is the second UE on the current resource allocation unit, the downlink transmission parameter indication information corresponding to the current resource allocation unit includes the TM information and/or the downlink transmission parameter configuration information of the second UE.

Wherein, the downlink transmission parameter configuration information is determined according to the TM information of the second UE, including at least one of the following: when the TM information indicates TM1 or TM2, the downlink transmission parameter configuration information includes at least one of the following information: MCS information, starting position information of the PDSCH and EPRE information of a CRS; when the TM information indicates TM3, the downlink transmission parameter configuration information includes at least one of the following information: the MCS information, an NZP CSI-RS configuration, a ZP CSI-RS configuration, resource index information of the current resource allocation unit, the starting position information of the PDSCH and the EPRE information of the CRS; when the TM information indicates TM4 or TM6, the downlink transmission parameter configuration information includes at least one of the following information: RI information, PMI information, the starting position information of the PDSCH, the MCS information and the EPRE information of the CRS; when the TM information indicates TM5, the downlink transmission parameter configuration information includes at least one of the following information: indication information indicating the number of multiplexing UEs, the RI information, first PMI information, second PMI information, the starting position information of the PDSCH, the MCS information and the EPRE information of the CRS; when the TM information indicates TM7, the downlink transmission parameter configuration information includes at least one of the following information: the starting position information of the PDSCH, the MCS information, ID information of the second UE of the current resource allocation unit and EPRE information of a CRS in a non-MBSFN subframe; and when the TM information indicates TM8/TM9/TM10, the downlink transmission parameter configuration information includes at least one of the following information: the number of DMRS ports and port indication information, the starting position information of the PDSCH, the MCS information, DMRS initialization parameter information and the EPRE information of the CRS in the non-MBSFN subframe.

In an example embodiment, when the downlink transmission parameter indication information of the second UE of the second access node and/or the first access node is sent to the first UE through the PDSCH, multiple manners may be adopted to bear the downlink transmission parameter indication information, and for example, the downlink transmission parameter indication information may be sent to the first UE in a manner of bearing the downlink transmission parameter indication information of the second UE of the second access node and/or the first access node in RRC signaling and/or MAC message in the PDSCH.

When the downlink transmission parameter indication information of the second UE of the second access node and/or the first access node is sent to the first UE through the PDSCH, multiple sending manners may also be adopted, and for example, the downlink transmission parameter indication information may be transmitted by the second access node through the PDSCH, that is, the second access node sends the downlink transmission parameter indication information to the first UE through a PDSCH of the second access node, wherein the second access node sends a first control signaling through a common search space or a predetermined UE-specific search space of a downlink control channel region of the second access node, wherein the first control signaling is used for scheduling the PDSCH of the second access node, and the second access node is an interference node of the first UE; and for another example, the downlink transmission parameter indication information may also be transmitted by the first access node through the PDSCH, that is, the first access node sends the downlink transmission parameter indication information to the first UE through a PDSCH of the first access node, wherein the first access node sends a second control signaling through a common search space or a predetermined UE-specific search space of a downlink control channel region of the first access node, wherein the second control signaling is used for scheduling the PDSCH of the first access node, and the first access node is a serving node of the first UE.

In an example embodiment, when the second access node sends the downlink transmission parameter indication information to the first UE through the PDSCH of the second access node, in order to improve a success rate of the first UE receiving the downlink transmission parameter indication information transmitted on the PDSCH, the first access node may not send any data at local time-frequency resource position corresponding to a time-frequency resource position where the PDSCH of the second access node is located; and/or, when the first access node sends the downlink transmission parameter indication information to the first UE through the PDSCH of the first access node, in order to distinguish second access nodes when multiple second access nodes exist at the same time, the first access node may add corresponding cell ID indication information to the downlink transmission parameter indication information.

Wherein, a scrambling code used for representing execution of IC may be adopted to scramble a CRC of a control channel used for transmitting the first control signaling or the second control signaling; and/or, the scrambling code sued for representing the execution of IC may be adopted to scramble the PDSCH of the first access node or the second access node. It is important to note that the scrambling code used for representing the execution of IC is UE-specific or group-specific. The PDSCH may be a PDSCH scheduled by downlink grant control signaling of which a CRC is scrambled by the scrambling code used for representing the execution of IC. Compared with an existing PDSCH, the downlink grant control signaling used for scheduling the PDSCH is scrambled through a specific scrambling code, and for example, the scrambling code may be marked as at least one of: a Network Assisted Interference Cancellation/Suppression-Radio Network Temporary Identity (NAICS-RNTI), an Interference Cancellation/Suppression-Radio Network Temporary Identity (ICS-RNTI) and a Successive Interference Cancellation-Radio Network Temporary Identity (SIC-RNTI).

In an example embodiment, the downlink transmission parameter indication information further includes at least one of: cell ID indication information of the second access node and at least one of the following CRS parameter information corresponding to an interference source: information of the number of antenna interfaces, CP type information, difference information of sequence numbers of subframes, configuration information of MBSFN subframes, configuration information of uplink/downlink subframes and configuration information of a special subframe.

The embodiment further provides a method for processing interference, Fig. 2 is a flowchart of a second method for processing interference according to an embodiment of the present disclosure, and as shown in Fig. 2, the flow includes the following steps:
Step 202: downlink transmission parameter indication information, sent by a network side through a PDSCH, of second UE of a second access node and/or a first access node is received, wherein the downlink transmission parameter indication information may include multiple kinds of information, and for example, may include at least one of: indication information indicating whether there is the second UE or not, TM information of the second UE and downlink transmission parameter configuration information of the second UE; and
Step 204: IC processing is performed on the second UE of the second access node and/or the first access node according to the received downlink transmission parameter indication information.

By the steps, for a first UE side, the first UE receives downlink transmission parameter indication information of interference UE through the PDSCH, wherein the interference UE includes the interference UE of a cell to which the first UE belongs and the interference UE in an interference neighboring cell, and compared with the related art of sending IC parameter information through an inter-cell X2 interface, such a manner has the advantages that the problems of high signaling overhead and great delay during acquisition of IC information, required by an advanced receiver, of the first UE in the related art are solved, and the effects of reducing signaling overhead and improving system performance are further achieved.

Wherein, the downlink transmission parameter indication information may be born in independent resource allocation units respectively: when the indication information indicating whether there is the second UE or not indicates that there is no the second UE on a current resource allocation unit, the downlink transmission parameter indication information corresponding to the current resource allocation unit does not include the TM information and/or the downlink transmission parameter configuration information of the second UE; and when the indication information indicating whether there is the second UE or not indicates that there is the second UE on the current resource allocation unit, the downlink transmission parameter indication information corresponding to the current resource allocation unit includes the TM information and/or the downlink transmission parameter configuration information of the second UE.

In addition, the downlink transmission parameter configuration information is determined according to the TM information of the second UE, including at least one of the following: when the TM information indicates TM1 or TM2, the downlink transmission parameter configuration information includes at least one of the following information: MCS information, starting position information of the PDSCH and EPRE information of a CRS; when the TM information indicates TM3, the downlink transmission parameter configuration information includes at least one of the following information: the MCS information, an NZP CSI-RS configuration, a ZP CSI-RS configuration, resource index information of the current resource allocation unit, the starting position information of the PDSCH and the EPRE information of the CRS; when the TM information indicates TM4 or TM6, the downlink transmission parameter configuration information includes at least one of the following information: RI information, PMI information, the starting position information of the PDSCH, the MCS information and the EPRE information of the CRS; when the TM information indicates TM5, the downlink transmission parameter configuration information includes at least one of the following information: indication information indicating the number of multiplexing UEs, the RI information, first PMI information, second PMI information, the starting position information of the PDSCH, the MCS information and the EPRE information of the CRS; when the TM information indicates TM7, the downlink transmission parameter configuration information includes at least one of the following information: the starting position information of the PDSCH, the MCS information, ID information of the second UE of the current resource allocation unit and EPRE information of a CRS in a non-MBSFN subframe; and when the TM information indicates TM8/TM9/TM10, the downlink transmission parameter configuration information includes at least one of the following information: the number of DMRS ports and port indication information, the starting position information of the PDSCH, the MCS information, DMRS initialization parameter information and the EPRE information of the CRS in the non-MBSFN subframe.

Corresponding to processing of the network side: multiple manners may also be adopted to receive the downlink transmission parameter indication information, sent by the network side through the PDSCH, of the second UE of the second access node and/or the first access node: for example, the downlink transmission parameter indication information sent by the network side is received in a manner of bearing the downlink transmission parameter indication information of the second UE of the second access node and/or the first access node in an RRC signaling and/or an MAC message in the PDSCH.

In addition, multiple processing manners may also be adopted to receive the downlink transmission parameter indication information, sent by the network side through the PDSCH, of the second UE of the second access node and/or the first access node: for example, the downlink transmission parameter indication information may be received through a PDSCH of the second access node, that is, the downlink transmission parameter indication information sent by the network side is received through the PDSCH of the second access node, wherein a first control signaling sent by the second access node and used for scheduling the PDSCH of the second access node is received through a common search space or a predetermined UE-specific search space of a downlink control channel region of the second access node; and for another example, the downlink transmission parameter indication information may also be received through a PDSCH of the first access node, that is, the downlink transmission parameter indication information sent by the network side is received through the PDSCH of the first access node, wherein a second control signaling sent by the first access node and used for scheduling the PDSCH of the first access node is received through a common search space or a predetermined UE-specific search space of a downlink control channel region of the first access node.

Similarly, a scrambling code used for representing execution of IC may be adopted to scramble a CRC of a control channel used for transmitting the first control signaling or the second control signaling; and/or, the scrambling code used for representing the execution of IC may be adopted to scramble the PDSCH of the first access node or the second access node.

Similarly, multiple manners may be adopted to receive the downlink transmission parameter indication information, sent by the network side through the PDSCH, of the second UE of the second access node and/or the first access node, and preferably, the following manner may be adopted: processing may be performed according to cell ID information, that is, cell ID indication information of the second UE of the second access node and/or the first access node is acquired; downlink grant control signaling used for scheduling the PDSCH which transmits the downlink transmission parameter configuration information is received in the control region of the cell indicated by the cell ID indication information; and the downlink transmission parameter indication information is received on the PDSCH scheduled by the downlink grant control signaling. It is important to note that the downlink transmission parameter indication information may further include at least one of: cell ID indication information of the second access node and at least one of the following CRS parameter information corresponding to an interference source: information of the number of antenna interfaces, CP type information, difference information of sequence numbers of subframes, configuration information of MBSFN subframes, configuration information of uplink/downlink subframes and configuration information of a special subframe.

The embodiment further provides a device for processing interference, which is configured to implement the abovementioned embodiment and example implementation modes, and that what has been described will not be elaborated. For example, term "component", used below, is a combination of software and/or hardware capable of realizing a preset function. The device described in the following embodiment is preferably implemented by software, but implementation of the device with hardware or the combination of software and hardware is also possible and conceivable.

Fig. 3 is a structure block diagram of a first device for processing interference according to an embodiment of the present disclosure, and as shown in Fig. 3, the first device for processing interference 30 includes a sending component 32. The device will be described below.

The sending component 32 is configured to send downlink transmission parameter indication information of second UE to first UE through a PDSCH, wherein the second UE belongs to a second access node and/or a first access node, the first UE performs IC processing according to the received downlink transmission parameter indication information.

Fig. 4 is a first structure block diagram of the sending component 32 in the first device for processing interference according to an embodiment of the present disclosure, and as shown in Fig. 4, the sending component 32 includes a first sending element 42. The first sending element 42 will be described below.

In an example embodiment, the first sending element 42 is configured to send the downlink transmission parameter indication information to the first UE in a manner of bearing the downlink transmission parameter indication information of the second UE in an RRC signaling and/or an MAC message in the PDSCH, wherein the second UE belongs to the second access node and/or the first access node.

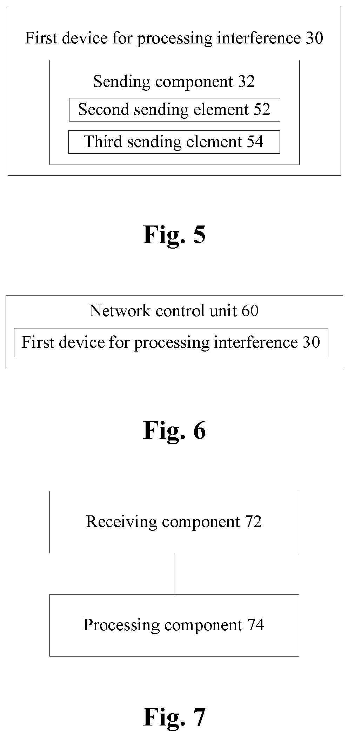

Fig. 5 is a second structure block diagram of the sending component 32 in the first device for processing interference according to an embodiment of the present disclosure, and as shown in Fig. 5, the sending component 32 includes a second sending element 52 and/or a third sending element 54. The sending component 34 will be described below.

The second sending element 52 is configured to send the downlink transmission parameter indication information to the first UE by the second access node through a PDSCH of the second access node, wherein the second access node sends a first control signaling through a common search space or a predetermined UE-specific search space of a downlink control channel region of the second access node wherein the first control signaling is used for scheduling the PDSCH of the second access node; and/or, the third sending element 54 is configured to send the downlink transmission parameter indication information to the first UE by the first access node through a PDSCH of the first access node, wherein the first access node sends a second control signaling through a common search space or a predetermined UE-specific search space of a downlink control channel region of the first access node, wherein the second control signaling is used for scheduling the PDSCH of the first access node.

The embodiment further provides a network control unit, Fig. 6 is a structure block diagram of a network control unit according to an embodiment of the present disclosure, and as shown in Fig. 6, the network control unit 60 includes the first device for processing interference 30 mentioned above.

Fig. 7 is a structure block diagram of a second device for processing interference according to an embodiment of the present disclosure, and as shown in Fig. 7, the device includes a receiving component 72 and a processing component 74. The device will be described below.

The receiving component 72 is configured to receive downlink transmission parameter indication information, sent by a network side through a PDSCH, of second UE of a second access node and/or a first access node; and the processing component 74 is connected to the receiving component 72, and is configured to perform IC processing on the second UE of the second access node and/or the first access node according to the received downlink transmission parameter indication information.

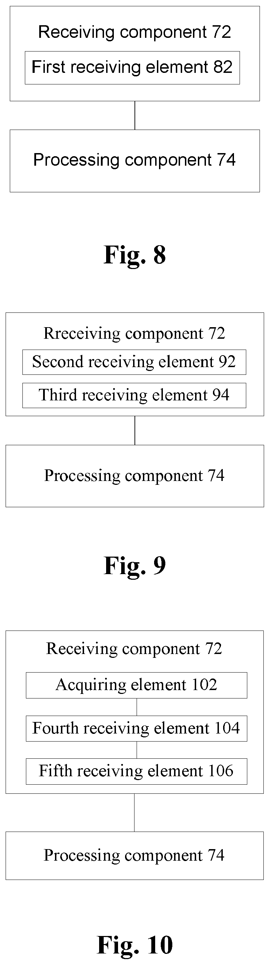

Fig. 8 is a first structure block diagram of the receiving component 72 in the second device for processing interference according to an embodiment of the present disclosure, and as shown in Fig. 8, the receiving component 72 includes a first receiving element 82. The first receiving element 82 will be described below.

The first receiving element 82 is configured to receive the downlink transmission parameter indication information sent by the network side in a manner of bearing the downlink transmission parameter indication information of the second UE of the second access node and/or the first access node in an RRC signaling and/or an MAC message in the PDSCH.

Fig. 9 is a second structure block diagram of the receiving component 72 in the second device for processing interference according to an embodiment of the present disclosure, and as shown in Fig. 9, the receiving component 72 includes a second receiving element 92 and/or a third receiving element 94. The receiving component 72 will be described below.

The second receiving element 92 is configured to receive the downlink transmission parameter indication information sent by the network side through a PDSCH of the second access node, wherein a first control signaling sent by the second access node and used for scheduling the PDSCH of the second access node is received through a common search space or a predetermined UE-specific search space of a downlink control channel region of the second access node; and/or, the third receiving element 94 is configured to receive the downlink transmission parameter indication information sent by the network side through a PDSCH of the first access node, wherein a second control signaling sent by the first access node and used for scheduling the PDSCH of the first access node is received through a common search space or a predetermined UE-specific search space of a downlink control channel region of the first access node.

Fig. 10 is a third structure block diagram of the receiving component 71 in the second device for processing interference according to an embodiment of the present disclosure, and as shown in Fig. 10, the receiving component 72 includes an acquiring element 102, a fourth receiving element 104 and a fifth receiving element 106. The receiving component 72 will be described below.

The acquiring element 102 is configured to acquire cell ID indication information of the second UE of the second access node and/or the first access node; the fourth receiving element 104 is connected to the acquiring element 102, and is configured to receive downlink grant control signaling used for scheduling the PDSCH in the downlink control channel region of a cell indicated by the cell ID indication information, wherein the PDSCH is used for transmitting the downlink transmission parameter configuration information; and the fifth receiving element 106 is connected to the fourth receiving element 104, and is configured to receive the downlink transmission parameter indication information on the PDSCH scheduled by the downlink grant control signaling.

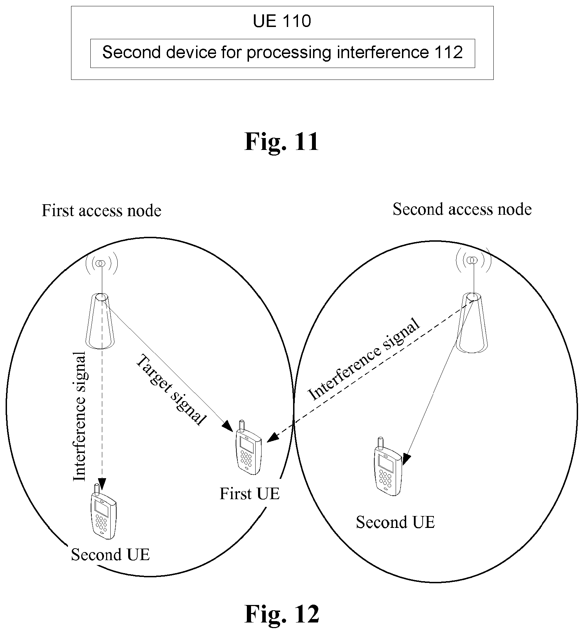

Fig. 11 is a structure block diagram of UE according to an embodiment of the present disclosure, and as shown in Fig. 11, the UE 110 includes the second device for processing interference 112 mentioned above.

In order to timely and effectively transmit information, such as an initialization parameter and a dynamic parameter, required by an advanced receiver to victim UE, the embodiment provides a signaling configuration solution used for network assisted IC, which includes that: a network side notifies downlink transmission parameter indication information of second UE of a second access node or a first access node to UE through a PDSCH, wherein the downlink transmission parameter indication information includes at least one of: indication information indicating whether there exists the second UE or not, TM information of the second UE and downlink transmission parameter configuration information of the second UE. By the method, IC or suppression information required by the advanced receiver may be timely and effectively transmitted to the victim UE, signaling overhead is low, and a delay is short. Wherein, the downlink transmission parameter indication information may be configured on each resource allocation unit respectively.

In an example embodiment, the downlink transmission parameter indication information of the second UE of the second access node or the first access node is notified to the UE through an RRC signaling or an MAC message.

In an example embodiment, the following manner may be adopted for a signaling design used for a network assisted IC, and for signaling on each resource allocation unit, for example, different parameters are notified according different values of "the indication information indicating whether there exists the second UE or not". Wherein, for signaling on each resource allocation unit, the following processing is performed according to different values of "the indication information indicating whether there exists the second UE or not": whether there exist/exists TM information and/or downlink transmission parameter configuration information of the second UE or not depends on a value of "the indication information indicating whether there exists the second UE or not", and for example: when the value of "the indication information indicating whether there exists the second UE or not" indicates that there is no the second UE on the current resource allocation unit, downlink parameter indication signaling corresponding to the resource allocation unit does not include signaling used for indicating "the TM information" and/or "the downlink transmission parameter configuration information", and when the value of "the indication information indicating whether there exists the second UE or not" indicates that there is the second UE on the current resource allocation unit, the downlink parameter indication signaling corresponding to the resource allocation unit includes signaling used for indicating "the TM information" and/or "the downlink transmission parameter configuration information".

In addition, information content in the downlink transmission parameter configuration information may also be determined by a value of "the TM information". Description will be given with an example: when a mode indicated by the TM information is TM1 or TM2, the downlink transmission parameter configuration information may not include any parameter; or, the downlink transmission parameter configuration information may include at least one of the following information of the current resource allocation unit: MCS information, starting position information of the PDSCH and EPRE information of a CRS.

When the mode indicated by the TM information is TM3, the downlink transmission parameter configuration information may not include any parameter; or, the downlink transmission parameter configuration information may also include at least one of the following information of the current resource allocation unit: the MCS information, an NZP CSI-RS configuration, a ZP CSI-RS configuration, resource index information of the current resource allocation unit relative to interference UE, the starting position information of the PDSCH and the EPRE information of the CRS.

When the mode indicated by the TM information is TM4 or TM6, the downlink transmission parameter configuration information may not include any parameter; or, the downlink transmission parameter configuration information may also include at least one of the following information of the current resource allocation unit: RI information, PMI information, the starting position information of the PDSCH, the MCS information and the EPRE information of the CRS.

When the mode indicated by the TM information is TM5, the downlink transmission parameter configuration information may not include any parameter; or, the downlink transmission parameter configuration information may also include at least one of the following information of the current resource allocation unit: indication information indicating the number of multiplexing UEs (or the RI information), first PMI information, second PMI information, the starting position information of the PDSCH, the MCS information and the EPRE information of the CRS. Wherein, when the indication information indicating the number of multiplexing UEs (or the RI information) indicates 1, the second PMI information is invalid.

When the mode indicated by the TM information is TM7, the downlink transmission parameter configuration information may not include any parameter; or, the downlink transmission parameter configuration information may also include at least one of the following information of the current resource allocation unit: the starting position information of the PDSCH, the MCS information, ID information of the second UE of the current resource allocation unit and EPRE information of a CRS in a non-MBSFN subframe.

When the mode indicated by the TM information is TM8/9/10, the downlink transmission parameter configuration information may not include any parameter; or, the downlink transmission parameter configuration information may also include at least one of the following information of the current resource allocation unit: the number of DMRS ports and port indication information, the starting position information of the PDSCH, the MCS information, DMRS initialization parameter information (ID information of the scrambling code and ID information of the virtual cell) and the EPRE information of the CRS in the non-MBSFN subframe.

It is important to note that a signaling design format of the downlink transmission parameter indication information may be a format predetermined by the network side with the UE. Preferably, the network side notifies, the downlink transmission parameter indication information, on each resource allocation unit, of the second UE, to the UE through the PDSCH, wherein the second UE belongs to the second access node or the first access node. For example, the second access node may transmit, downlink transmission parameter indication information on each resource allocation unit of the second access node, through the PDSCH, and send downlink control signaling used for scheduling the PDSCH through a common search space or a UE-specific search space of a downlink control channel region of the second access node.

For another example, the following manner may also be adopted for the processing that the network side notifies, the downlink transmission parameter indication information, on each resource allocation unit, of the second UE of the second node or the first access node, to the UE through the PDSCH: the first access node transmits, the downlink transmission parameter indication information on each resource allocation unit of the second access node, of the second UE, though the PDSCH, and sends a downlink control signaling used for scheduling the PDSCH through a common search space or a UE-specific search space of a downlink control channel region of the first access node, wherein there may be at least one second access node.

Preferably, when the second node transmits the downlink transmission parameter indication information on each resource allocation unit of an interference cell through the PDSCH, the first access node does not send any data on local cell time-frequency resource corresponding to the PDSCH of the second node.

Wherein, when the first access node transmits the downlink transmission parameter indication information on each resource allocation unit of the interference cell through the PDSCH, ID information of the corresponding cell is added to the front of the downlink transmission parameter indication information of each resource allocation unit of each interference cell.

The first access node notifies at least one of the following information of an interference source to the victim UE through a UE-specific RRC signaling or an MAC message: cell ID indication information of the second access node and CRS parameter indication information corresponding to the interference source, wherein the CRS parameter indication information at least includes the number of antenna ports, CP type information, difference information of sequence numbers of subframes, indication information of an MBSFN subframe, indication information of uplink/downlink subframes and indication information of a special subframe, wherein the difference information of sequence numbers of subframes refers to subframe synchronization error information of the second access node relative to the first access node.

Wherein, there may be at least one set of interference source information which corresponds to at least one strong interference condition respectively.

A downlink grant control signaling for a downlink grant of the PDSCH through which the downlink transmission parameter indication information on each resource allocation unit of the second access node is transmitted is scrambled by a UE-specific scrambling code. For example, the scrambling code may be marked as at least one of: an NAICS-RNTI, an ICS-RNTI and an SIC-RNTI.

The network side is controlled by a central control unit or a higher layer to be enabled to send the downlink transmission parameter indication information on each resource allocation unit of the second access node through the first access node or the second access node.

The embodiment further provides a signaling configuration method for network assisted IC, which includes that: UE receives UE-specific RRC signaling, determines cell ID indication information of a second access node, and receives downlink transmission parameter indication information on each resource allocation unit corresponding to the second access node through a PDSCH according to the cell ID indication information.

Wherein, the PDSCH is a specific PDSCH scheduled by downlink grant control signaling of which a CRC is scrambled by a scrambling code used for representing network assisted cancellation. For example, the scrambling code may be an NAICS-RNTI, an ICS-RNTI and an SIC-RNTI.

Preferably, when the UE receives the downlink transmission parameter indication information on each resource allocation unit corresponding to the second access node through the PDSCH according to the cell ID indication information, multiple manners may be adopted for processing: for example, the following processing manner may be adopted: the UE receives, in a control region of the cell indicated by the cell ID indication information, the downlink grant control signaling corresponding to the scrambling code which is scrambled a specific CRC, and according to the downlink grant control signaling, receives, on a service channel of the cell indicated by the cell ID indication information, the downlink transmission parameter indication information on each resource allocation unit corresponding to the second access node.

For another example, when the UE receives the downlink transmission parameter indication information on each resource allocation unit corresponding to the second access node through the PDSCH according to the cell ID indication information, the following processing manner may also be adopted: the UE receives, on the first access node, the downlink grant control signaling corresponding to the scrambling code which is scrambled by a specific CRC; and according to the downlink grant control signaling, receives on a PDSCH of the first access node the downlink transmission parameter indication information on each resource allocation unit of at least one second access node; and extracts the downlink transmission parameter indication information on each resource allocation unit corresponding to the access node according to the cell ID indication information, configured according to the UE-specific RRC signaling received by the UE, of the second access node.

A preferred implementation mode of the present disclosure will be described below with reference to the drawings.

The embodiment provides a signaling configuration method for network assisted IC, which includes that: a network side notifies downlink transmission parameter indication information of second UE of a second access node or a first access node to UE through a PDSCH, wherein the downlink transmission parameter indication information includes, but not limited to, at least one of the following parameters: indication information indicating whether there exists the second UE or not, TM information of the second UE and downlink transmission parameter configuration information of the second UE.

Wherein, the downlink transmission parameter indication information is configured on each resource allocation unit respectively. Each resource allocation unit refers to a Physical Resource Block (PRB) or a PRB pair or a sub-band. Specifically, the downlink transmission parameter indication information of the second UE of the second access node or the first access node is notified to the UE through an RRC signaling or an MAC message. It is important to note that the RRC signaling or the MAC message in an LTE system is usually born in a PDSCH of a physical layer.

Fig. 12 is a diagram of interference of a wireless communication system according to an example embodiment of the present disclosure. As shown in Fig. 12, the first access node is a serving cell of the UE (also called first UE), and when sending a target signal to the UE, the first access node may be interfered by a sent signal of the second UE of the second access node or the first access node, wherein a cell of the second access node is also called an interference cell of the first UE, and the second UE in the cell of the first access node is usually paired UE of victim UE (UE) under a Multiple User (MU) condition. In Fig. 12, only one second access node of the first UE is drawn to facilitate description, and there may practically not be only one second access node for specific first UE. The UE may perform IC/suppression for merely one second node during IC/suppression, and may also simultaneously perform IC/suppression for multiple second nodes. Therefore, the network side sends, through the PDSCH, at least one set of downlink transmission parameter indication information, which corresponds to at least one second node condition respectively.

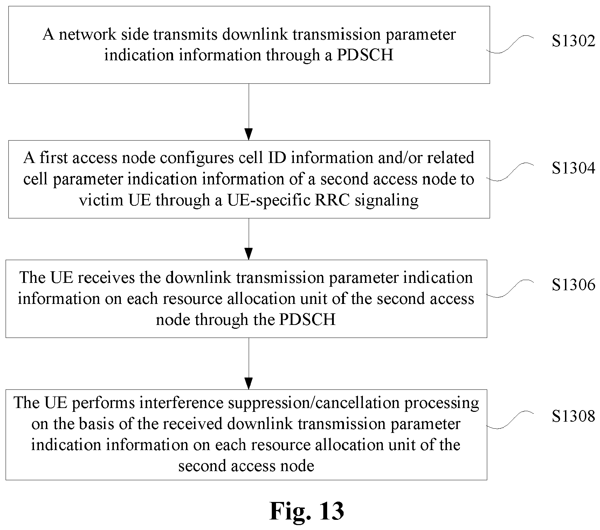

Fig. 13 is a flowchart of IC configuration according to an example embodiment of the present disclosure, and as shown in Fig. 13, the flow includes the following steps.

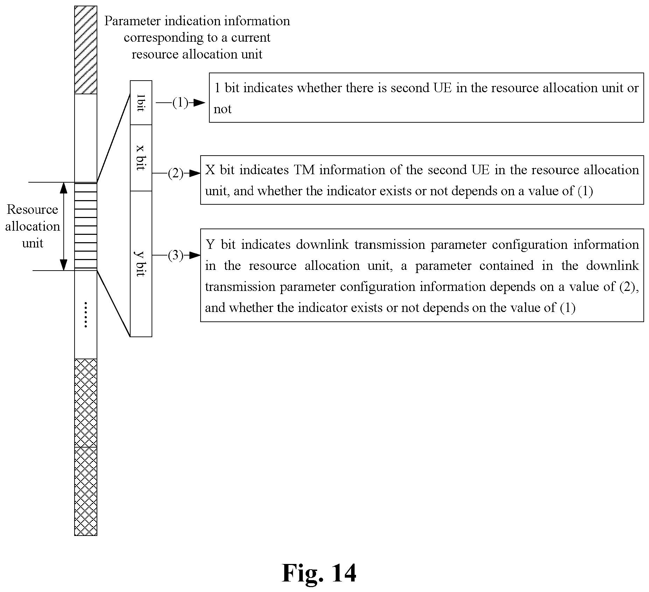

Step 1302: the network side transmits the downlink transmission parameter indication information through the PDSCH, and scrambles a CRC of downlink grant control signaling with a specific RNTI, wherein the specific RNTI is recorded as, for example, an NAICS-RNTI, an ICS-RNTI or an SIC-RNTI; and the downlink transmission parameter indication information is configured on each resource allocation unit respectively. The downlink transmission parameter indication information may include, but not limited to, at least one of the following parameters: indication information indicating whether there exists the second UE or not, TM information of the second UE and downlink transmission parameter configuration information of the second UE. The parameter indication information is transmitted through the PDSCH by adopting a signaling format predetermined by the network side with the UE. Fig. 14 is a diagram of a signaling design for network assisted IC according to an example embodiment of the present disclosure. As shown in Fig. 14, in such a signaling design manner, whether there exist/exists the TM information and/or downlink transmission parameter configuration information of the second UE or not depends on a value of "the indication information indicating whether there exists the second UE or not", and when the value of "the indication information indicating whether there exists the second UE or not" indicates that there is no the second UE on a current resource allocation unit, downlink parameter indication signaling corresponding to the current resource allocation unit does not include a signaling used for indicating "the TM information" and/or "the downlink transmission parameter configuration information". When the value of "the indication information indicating whether there exists the second UE or not" indicates that there is the second UE on the current resource allocation unit, the downlink parameter indication signaling corresponding to the resource allocation unit includes the signaling used for indicating "the TM information" and/or "the downlink transmission parameter configuration information". Information content in the downlink transmission parameter configuration information is determined by a value of the "TM information", and for example, the following manners may be included.

When a mode indicated by the TM information is TM1 or TM2, the downlink transmission parameter configuration information may not include any parameter, or the downlink transmission parameter configuration information may also include at least one of the following information of the current resource allocation unit: MCS information, starting position information of the PDSCH and EPRE information of a CRS.

When the mode indicated by the TM information is TM3, the downlink transmission parameter configuration information may not include any parameter, or the downlink transmission parameter configuration information may also include at least one of the following information of the current resource allocation unit: the MCS information, NZP-CSI-RS indication information, ZP-CSI-RS indication information, resource index information of the current resource allocation unit relative to interference UE, the starting position information of the PDSCH and the EPRE information of the CRS.

When the mode indicated by the TM information is TM4 or TM6, the downlink transmission parameter configuration information may not include any parameter, or the downlink transmission parameter configuration information may also include at least one of the following information of the current resource allocation unit: RI information, PMI information, the starting position information of the PDSCH, the MCS information and the EPRE information of the CRS.

When the mode indicated by the TM information is TM5, the downlink transmission parameter configuration information may not include any parameter, or the downlink transmission parameter configuration information may also include at least one of the following information of the current resource allocation unit: indication information indicating the number of multiplexing UEs (or the RI information), first PMI information, second PMI information, the starting position information of the PDSCH, the MCS information and the EPRE information of the CRS. Wherein, when the indication information indicating the number of multiplexing UEs (or the RI information) is 1, the second PMI information is invalid.

When the mode indicated by the TM information is TM7, the downlink transmission parameter configuration information may not include any parameter, or the downlink transmission parameter configuration information may also include at least one of the following information of the current resource allocation unit: the starting position information of the PDSCH, the MCS information, ID information of the second UE of the current resource allocation unit and EPRE information of a CRS in a non-MBSFN subframe.

When the mode indicated by the TM information is TM8/9/10, the downlink transmission parameter configuration information may not include any parameter, or the downlink transmission parameter configuration information may also include at least one of the following information of the current resource allocation unit: the number of DMRS ports and port indication information, the starting position information of the PDSCH, the MCS information, DMRS initialization parameter information (ID information of a scrambling code and ID information of a virtual cell) and the EPRE information of the CRS in the non-MBSFN subframe.

In addition, multiple manners may be adopted for the network side to transmit a downlink transmission parameter of the second access node through the PDSCH, and may, for example, include the following two manners.

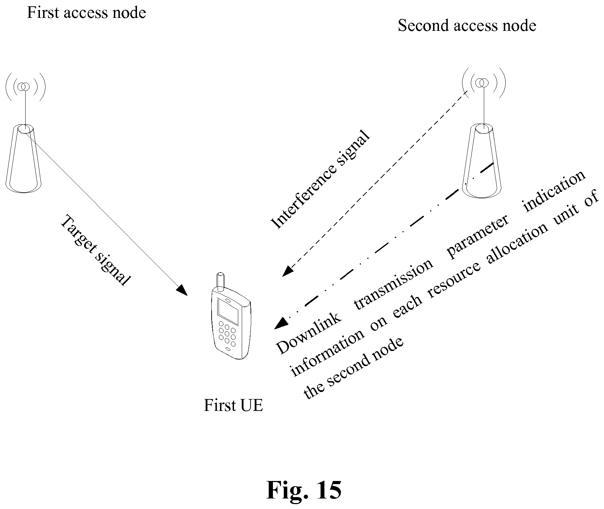

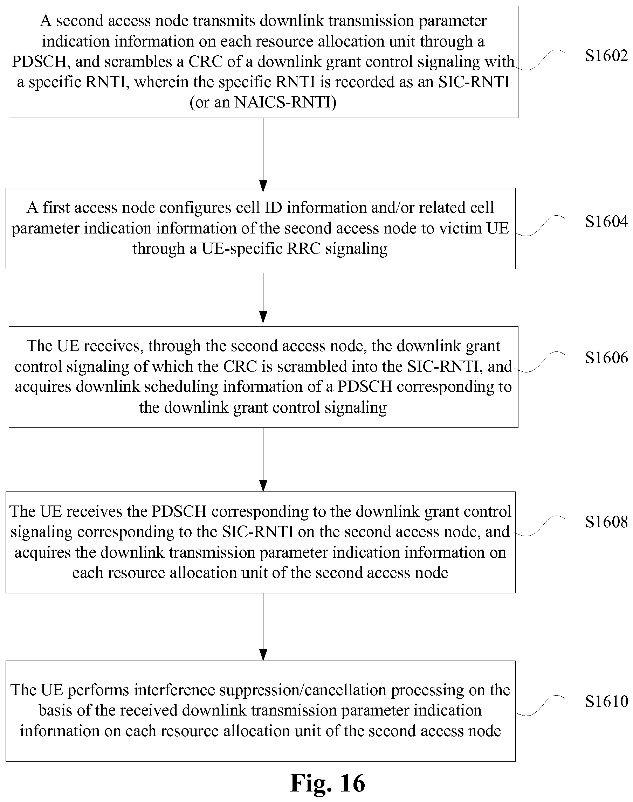

Manner 1: Fig. 15 is a diagram of a first manner for downlink transmission parameter configuration of an interference cell on each resource allocation unit according to an example embodiment of the present disclosure, and as shown in Fig. 15, the second access node transmits downlink transmission parameter indication information of the second access node through the PDSCH of the second access node, and sends, through a common search space or a UE-specific search space of the second access node, downlink control signaling (i.e. the abovementioned first control signaling) used for scheduling the PDSCH. In order to support the first UE to successfully receive the PDSCH of the second access node, the first access node does not send any data at local own time-frequency resource position corresponding to a time-frequency position where the PDSCH of the second access node is located. Descriptions will be given below on the basis of a processing flow of the first manner, described in Fig. 15, for downlink transmission parameter configuration of an interference cell on each resource allocation unit, Fig. 16 is a processing flowchart of a first manner for downlink transmission configuration of an interference cell on each resource allocation unit according to an example embodiment of the present disclosure, and as shown in Fig. 16, the flow includes the following steps:
Step 1602: the second access node transmits the downlink transmission parameter indication information on each resource allocation unit through the PDSCH, and scrambles the CRC of the downlink grant control signaling with the specific RNTI, wherein the specific RNTI is recorded as an SIC-RNTI (or an NAICS-RNTI);
Step 1604: the first access node configures cell ID information and/or related cell parameter indication information of the second access node for the victim UE through a UE-specific RRC signaling;
Step 1606: the UE receives the downlink grant control signaling of which the CRC is scrambled into the SIC-RNTI through the second access node, and acquires PDSCH downlink scheduling information corresponding to the downlink grant control signaling;
Step 1608: the UE acquires, on the PDSCH corresponding to the downlink grant control signaling, corresponding to the SIC-RNTI, received by the second access node, the downlink transmission parameter indication information on each resource allocation unit of the second access node; and
Step 1610: the UE performs interference suppression/cancellation processing on the basis of the received downlink transmission parameter indication information on each resource allocation unit of the second access node.

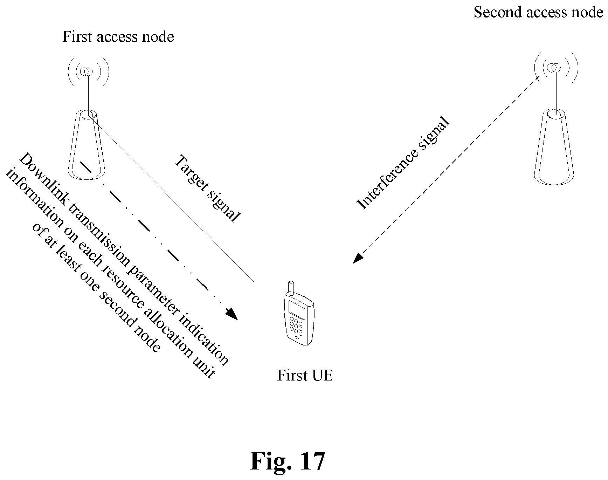

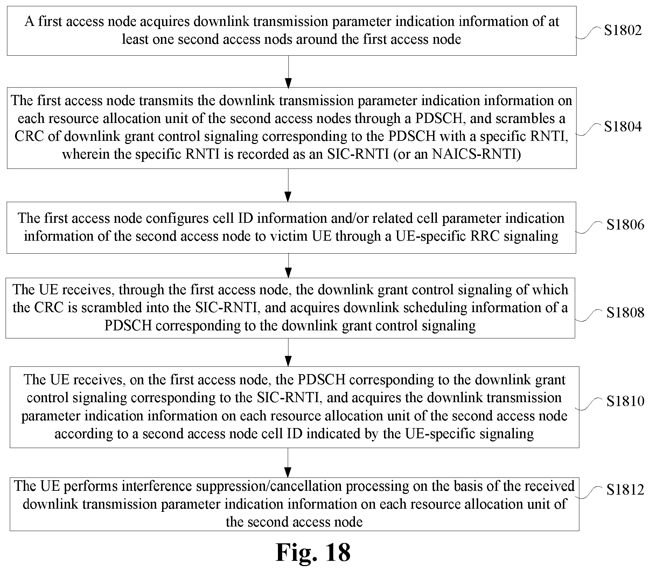

Manner 2: Fig. 17 is a diagram of a second manner for downlink transmission parameter configuration of an interference cell on each resource allocation unit according to an example embodiment of the present disclosure, and as shown in Fig. 17, the first access node transmits the downlink transmission parameter indication information of at least one second access node through the PDSCH of the second access node, and sends, through a common search space or a UE-specific search space of the second access node, downlink control signaling (i.e. the abovementioned second control signaling) used for scheduling the PDSCH. Descriptions will be given below on the basis of a flow of the second manner for downlink transmission parameter configuration on each resource allocation unit of the interference cell, Fig. 18 is a processing flowchart of a second manner for downlink transmission parameter configuration of an interference cell on each resource allocation unit according to an example embodiment of the present disclosure, and as shown in Fig. 18, the flow includes the following steps:
Step 1802: the first access node acquires the downlink transmission parameter indication information of at least one second access node around the first access node;
Step 1804: the first access node transmits the downlink transmission parameter indication information on each resource allocation unit of the second access node through the PDSCH, and scrambles a CRC of downlink grant control signaling corresponding to the PDSCH with a specific RNTI, wherein the specific RNTI is recorded as an SIC-RNTI (or an NAICS-RNTI);
Step 1806: the first access node configures cell ID information and/or related cell parameter indication information of the second access node for the victim UE through UE-specific RRC signaling;
Step 1808: the UE receives, through the first access node, the downlink grant control signaling of which the CRC is scrambled into the SIC-RNTI, and acquires PDSCH downlink scheduling information corresponding to the downlink grant control signaling;
Step 1810: the UE receives the PDSCH corresponding to the downlink grant control signaling corresponding to the SIC-RNTI through the first access node, and acquires the downlink transmission parameter indication information on each resource allocation unit of the second access node according to a second access node cell ID indicated by the UE-specific signaling; and
Step 1812: the UE performs interference suppression/cancellation processing on the basis of the received downlink transmission parameter indication information on each resource allocation unit of the second access nodes.

Wherein, the downlink transmission parameter indication information is configured on the basis of each resource allocation unit respectively.

In an example embodiment, the network side is controlled by a central control unit or a higher layer to be enabled to send the downlink transmission parameter indication information on each resource allocation unit of the second access node through the PPDSCH of the first access node or the PPDSCH of the second access node.

Step 1304: the first access node configures the cell ID information and/or related cell parameter indication information of the second access node for the victim UE through the UE-specific RRC signaling, that is, when the network side determines certain victim UE is required to perform IC/suppression processing on the second access node, the first access node (the serving cell) notifies the cell ID information and/or related cell parameter configuration information of the second access node to the victim UE through a UE-specific RRC signaling or an MAC message, wherein the related cell parameter configuration information may include at least one of the following information: CRS parameter configuration information (for example, information of the number of antenna ports) corresponding to the second access node, CP type information, difference information of sequence numbers of subframes, configuration information of MBSFN subframes, configuration information of uplink/downlink subframes and configuration information of a special subframe, and the difference information of sequence numbers of subframes refers to subframe synchronization error information of the second access node relative to the first access node.

Step 1306: the UE receives the downlink transmission parameter indication information on each resource allocation unit of the second access node through the PDSCH, that is, the victim UE receives the cell ID information and/or related cell parameter indication information of the second access node, receives the downlink grant control signaling corresponding to the specific scrambling code which scrambles the CRC in the corresponding control region by virtue of the specific RNTI (for example, an NAICS-RNTI, an ICS-RNTI or an SIC-RNTI) according to the cell ID information and/or related cell parameter indication information, and receives, on the basis of the downlink grant control signaling, the downlink transmission parameter indication information on each resource allocation unit corresponding to the second access node on the corresponding PDSCH.

Step 1308: the UE performs interference suppression/cancellation processing on the basis of the received downlink transmission parameter indication information on each resource allocation unit of the second access node.

Embodiments of the example implementation mode of the present disclosure will be described below.

### Example 1

A second access node transmits downlink transmission parameter indication information of the second access node through a PDSCH, and sends, through a common search space or UE-specific search space in a control region of the second access node, downlink control signaling used for scheduling the PDSCH.

Wherein, the downlink transmission parameter indication information is configured on the basis of each resource allocation unit respectively.

A CRC of downlink grant control signaling for a downlink grant corresponding to the PDSCH through which the downlink transmission parameter indication information on each resource allocation unit of the second access node is transmitted is scrambled through a specific scrambling code which may be, for example, recorded as NAICS-RNTI or an ICS-RNTI or an SIC-RNTI.

In an example embodiment, a method for downlink transmission parameter configuration on each resource allocation unit of the second access node may adopt the signaling design method shown in Fig. 14. In Fig. 14, it is supposed, for example, that the downlink transmission parameter configuration information (or called indication information) includes the three following information: indication information indicating whether there exists second UE or not, TM information of the second UE and downlink transmission parameter configuration information of the second UE, and it is important to note that the downlink transmission parameter indication information may merely include at least one parameter during a practical application. In such a schematic manner, a downlink transmission parameter configuration on each resource allocation unit is indicated by 1+x+y bits, wherein 1 bit (such as (1) in the figure) is used for indicating whether there is the second UE in the resource allocation unit or not; x bit (such as (2) in the figure) is used for indicating the TM information of the second UE on the resource allocation unit, and whether the indicator exists or not depends on a value of (1); and y bit (such as (3) in the figure) is used for indicating specific downlink transmission parameter configuration information in the resource allocation unit, whether the indicator exists or not also depends on the value of (1), and when the indicator exists, a parameter in the indicator depends on a value of (2). For example, when the value of (1) indicates that there is no the second UE on the current resource allocation unit, downlink parameter indication signaling corresponding to the resource allocation unit does not include signaling used for indicating "the TM information" and/or "the downlink transmission parameter configuration information", that is, both x and y are equal to 0; otherwise, when the value of (1) indicates that there is the second UE on the current resource allocation unit, the downlink parameter indication signaling corresponding to the resource allocation unit includes the signaling used for indicating "the TM information" and/or "the downlink transmission parameter configuration information", that is, at least one of x and y is unequal to 0.

For the latter condition, information content in "the downlink transmission parameter configuration information" is determined by a value of "the TM information", and for example:
when the TM information indicates TM1 or TM2, the downlink transmission parameter configuration information includes at least one of the following information of the current resource allocation unit: MCS information and starting position information of the PDSCH;
when the TM information indicates TM3, the downlink transmission parameter configuration information includes at least one of the following information of the current resource allocation unit: the MCS information, an NZP-CSI-RS configuration, a ZP-CSI-RS configuration, resource index information of the current resource allocation unit relative to interference UE and the starting position information of the PDSCH;
when the TM information indicates TM4 or TM6, the downlink transmission parameter configuration information includes at least one of the following information of the current resource allocation unit: RI information, PMI information, the starting position information of the PDSCH and the MCS information;
when the TM information indicates TM5, the downlink transmission parameter configuration information includes at least one of the following information of the current resource allocation unit: indication information indicating the number of multiplexing users, the RI information, first PMI information, second PMI information, the starting position information of the PDSCH and the MCS information, wherein, when the indication information indicating the number of multiplexing users is 1 or the RI information is 1, the second PMI information is invalid;
when the TM information indicates TM7, the downlink transmission parameter configuration information includes at least one of the following information of the current resource allocation unit: the starting position information of the PDSCH, the MCS information and ID information of the second UE of the current resource allocation unit; and
when the TM information indicates TM8/9/10, the downlink transmission parameter configuration information includes at least one of the following information of the current resource allocation unit: the number of DMRS ports and port indication information, the starting position information of the PDSCH, the MCS information and DMRS initialization parameter information (scrambling code ID information and ID information of a virtual cell).

A serving cell notifies cell ID information and/or related cell parameter indication information of an interference cell to victim UE through UE-specific RRC signaling, wherein the cell parameter indication information includes at least one of the following information: CRS parameter configuration information (for example, antenna port number information) corresponding to an interference source , CP type information, difference information of sequence numbers of subframes, configuration information of MBSFN subframes, configuration information of uplink/downlink subframes and configuration information of a special subframe. Wherein, the difference information of the sequence numbers of subframes refers to subframe synchronization error information of the second access node relative to a first access node.

UE receives the cell ID information through UE-specific signaling, receives downlink grant control signaling corresponding to a specific CRC scrambling code in a control region of a cell indicated by the cell ID information, and receives, on the basis of the downlink grant control signaling, the downlink transmission parameter indication information on each resource allocation unit corresponding to the second access node on a service channel of the cell indicated by the cell ID indication information.

The UE performs interference suppression/cancellation processing on the basis of the received downlink transmission parameter indication information on each resource allocation unit of the interference cell.

### Example 2

An access first access node acquires downlink transmission parameter indication information of at least one second access node around the first access node.

A network side transmits the downlink transmission parameter indication information on each resource allocation unit of the second access nodes through a PDSCH of the first access node, and sends, through a common search space or UE-specific search space in a control region of the first access node, downlink control signaling used for scheduling the PDSCH, wherein a CRC of downlink grant control signaling for a downlink grant corresponding to the PDSCH through which the downlink transmission parameter indication information on each resource allocation unit of the second access nodes is transmitted is scrambled by a specific scrambling code which is, for example, recorded as an NAICS-RNTI or an ICS-RNTI or an SIC-RNTI.

Wherein, a method for downlink transmission parameter configuration on each resource allocation unit of an interference cell is shown in Fig. 14. In Fig. 14, it is supposed, for example, that the downlink transmission parameter configuration information includes: indication information indicating whether there exists the second UE or not, TM information of the second UE and downlink transmission parameter configuration information of the second UE, and it is important to note that the downlink transmission parameter indication information may merely include at least one of the parameter during a practical application. In such a schematic manner, the downlink transmission parameter configuration information (or called indication information) on each resource allocation unit is indicated by 1+x+y bits, wherein 1 bit (such as (1) in the figure) is used for indicating whether there is the second UE in the resource allocation unit or not; x bit (such as (2) in the figure) is used for indicating the TM information of the second UE in the resource allocation unit, and whether the indicator exists or not depends on a value of (1); and y bit (such as (3) in the figure) is used for indicating specific downlink transmission parameter configuration information in the resource allocation unit, whether the indicator exists or not also depends on the value of (1), and when the indicator exists, a parameter in the indicator depends on a value of (2). For example, when the value of (1) indicates that there is no second UE on the current resource allocation unit, downlink parameter indication signaling corresponding to the resource allocation unit does not include signaling used for indicating "the TM information" and/or "the downlink transmission parameter configuration information", that is, both x and y are equal to 0; otherwise, when the value of (1) indicates that there is the second UE on the current resource allocation unit, the downlink parameter indication signaling corresponding to the resource allocation unit includes the signaling used for indicating "the TM information" and/or "the downlink transmission parameter configuration information", that is, at least one of x and y is unequal to 0.

For the latter condition, information content in "the downlink transmission parameter configuration information" is determined by a value of "the TM information", and for example:
when the TM information indicates TM1 or TM2, the downlink transmission parameter configuration information includes at least one of the following information of the current resource allocation unit: MCS information and starting position information of the PDSCH;
when the TM information indicates TM3, the downlink transmission parameter configuration information includes at least one of the following information of the current resource allocation unit: the MCS information, an NZP-CSI-RS configuration, a ZP-CSI-RS configuration, resource index information of the current resource allocation unit relative to interference UE and the starting position information of the PDSCH;
when the TM information indicates TM4 or TM6, the downlink transmission parameter configuration information includes at least one of the following information of the current resource allocation unit: RI information, PMI information, the starting position information of the PDSCH and the MCS information;
when the TM information indicates TM5, the downlink transmission parameter configuration information includes at least one of the following information of the current resource allocation unit: indication information indicating the number of multiplexing users, the RI information, first PMI information, second PMI information, the starting position information of the PDSCH and the MCS information, wherein, when the indication information indicating the number of multiplexing users is 1 or the RI information is 1, the second PMI information is invalid;
when the TM information indicates TM7, the downlink transmission parameter configuration information includes at least one of the following information of the current resource allocation unit: cell ID information, the starting position information of the PDSCH, the MCS information and second UE ID information of the current resource allocation unit; and
when the TM information indicates TM8/9/10, the downlink transmission parameter configuration information includes at least one of the following information of the current resource allocation unit: the number of DMRS ports and port indication information, the starting position information of the PDSCH, the MCS information and DMRS initialization parameter information (ID information of the scrambling code and ID information of the virtual cell).

A serving cell notifies cell ID information and/or related cell parameter indication information of a strong interference cell or a cell on which IC/suppression is required to be performed to victim UE through UE-specific RRC signaling, wherein the cell parameter indication information includes at least one of the following information: CRS parameter configuration information (for example, antenna port number information) corresponding to an interference source, CP type information, difference information of sequence numbers of subframe, configuration information of MBSFN subframes, configuration information of uplink/downlink subframes and configuration information of a special subframe. Wherein, the difference information of sequence numbers of subframe refers to subframe synchronization error information of the second access nodes relative to a first access node.

UE receives downlink grant control signaling corresponding to a specific CRC scrambling code RNTI (for example, an NAICS-RNTI, an ICS-RNTI or an SIC-RNTI) through the first access node, receives, on the basis of the downlink grant control signaling, the downlink transmission parameter indication information on each resource allocation unit of the at least one second access node on a PDSCH of the first access node, and extracts the downlink transmission parameter indication information on each resource allocation unit corresponding to the access node according to the cell ID indication information, configured according to the UE-specific RRC signaling received by the UE, of the second access nodes.

The UE performs interference suppression/cancellation processing on the basis of the received downlink transmission parameter indication information on each resource allocation unit of the interference cell.

### Example 3

Relative to embodiment 2, the embodiment has a main characteristic that cell ID indication information is added to downlink transmission parameter indication information.

A first access node acquires downlink transmission parameter indication information of at least one second access node around the first access node.

A network side transmits the downlink transmission parameter indication information on each resource allocation unit of the second access nodes through a PDSCH of the first access node, and sends, through a common search space or UE-specific search space in a control region of the first access node, downlink control signaling used for scheduling the PDSCH, wherein a CRC of downlink grant control signaling for a downlink grant corresponding to the PDSCH through which the downlink transmission parameter indication information on each resource allocation unit of the second access nodes is transmitted is scrambled by a specific scrambling code which is, for example, recorded as an NAICS-RNTI or an ICS-RNTI or an SIC-RNTI.

Wherein, a method for downlink transmission parameter configuration on each resource allocation unit of an interference cell is shown in Fig. 14. In Fig. 14, a downlink transmission parameter configuration on each resource allocation unit is indicated by 1+x+y bits, wherein 1 bit (such as (1) in the figure) is used for indicating whether there is the second UE in the resource allocation unit or not; x bit (such as (2) in the figure) is used for indicating TM information of the second UE in the resource allocation unit, and whether the indicator exists or not depends on a value of (1); and y bit (such as (3) in the figure) is used for indicating specific downlink transmission parameter configuration information in the resource allocation unit, whether the indicator exists or not also depends on the value of (1), and when the indicator exists, a parameter in the indicator depends on a value of (2). For example, when the value of (1) indicates that there is no second UE on the current resource allocation unit, downlink parameter indication signaling corresponding to the resource allocation unit does not include signaling used for indicating "the TM information" and/or "the downlink transmission parameter configuration information", that is, both x and y are equal to 0; otherwise, when the value of (1) indicates that there is second UE on the current resource allocation unit, the downlink parameter indication signaling corresponding to the resource allocation unit includes the signaling used for indicating "the TM information" and/or "the downlink transmission parameter configuration information", that is, at least one of x and y is unequal to 0.

For the latter condition, information content in "the downlink transmission parameter configuration information" is determined by a value of "the TM information", and for example:
when the TM information indicates TM1 or TM2, the downlink transmission parameter configuration information includes at least one of the following information of the current resource allocation unit: cell ID information, MCS information and starting position information of the PDSCH;
when the TM information indicates TM3, the downlink transmission parameter configuration information includes at least one of the following information of the current resource allocation unit: the cell ID information, the MCS information, an NZP-CSI-RS configuration, a ZP-CSI-RS configuration, resource index information of the current resource allocation unit relative to interference UE and the starting position information of the PDSCH;
when the TM information indicates TM4 or TM6, the downlink transmission parameter configuration information includes at least one of the following information of the current resource allocation unit: the cell ID information, RI information, PMI information, the starting position information of the PDSCH and the MCS information;
when the TM information indicates TM5, the downlink transmission parameter configuration information includes at least one of the following information of the current resource allocation unit: the cell ID information, indication information indicating the number of multiplexing UEs, the RI information, first PMI information, second PMI information, the starting position information of the PDSCH and the MCS information, wherein, when the indication information indicating the number of multiplexing UEs number is 1 or the RI information is 1, the second PMI information is invalid;
when the TM information indicates TM7, the downlink transmission parameter configuration information includes at least one of the following information of the current resource allocation unit: the cell ID information, the starting position information of the PDSCH, the MCS information and ID information of the second UE of the current resource allocation unit; and
when the TM information indicates TM8/9/10, the downlink transmission parameter configuration information includes at least one of the following information of the current resource allocation unit: the cell ID information, the number of DMRS ports and port indication information, the starting position information of the PDSCH, the MCS information and DMRS initialization parameter information (ID information of a scrambling code and ID information of a virtual cell).

A serving cell notifies cell ID information and/or related cell parameter configuration information of a strong interference cell or a cell on which IC/suppression is required to be performed to victim UE through UE-specific RRC signaling, wherein the cell parameter configuration information includes at least one of the following information: CRS parameter configuration information (for example, information of the number of antenna ports) corresponding to an interference source, CP type information, difference information of sequence numbers of subframes, configuration information of MBSFN subframes, configuration information of uplink/downlink subframes and configuration information of a special subframe. Wherein, the difference information of sequence numbers of subframes refers to subframe synchronization error information of the second access nodes relative to a first access node.

UE receives downlink grant control signaling corresponding to a specific CRC scrambling code RNTI through the first access node, receives the downlink transmission parameter indication information on each resource allocation unit of the at least one second access node (strong interference cells corresponding to cell IDs obtained by the UE-specific RRC signaling, received by the victim UE, of the serving cell) on a PDSCH of the first access node on the basis of the downlink grant control signaling, and extracts the downlink transmission parameter indication information on each resource allocation unit corresponding to the access node according to the cell ID indication information, configured according to the UE-specific RRC signaling received by the UE, of the second access nodes.

The UE performs interference suppression/cancellation processing on the basis of the received downlink transmission parameter indication information on each resource allocation unit of the interference cell.

### Example 4

A second access node transmits downlink transmission parameter indication information of the second access node through a RRC signaling or an MAC message, wherein the RRC signaling or the MAC message is born on a PDSCH of the second node, and sends downlink control signaling used for scheduling the PDSCH through a common search space or a UE-specific search space in a control region of the second access node.

Wherein, the downlink transmission parameter indication information is configured on the basis of each resource allocation unit respectively.

Wherein, a CRC of downlink grant control signaling for a downlink grant corresponding to the PDSCH through which the downlink transmission parameter indication information on each resource allocation unit of the second access node is transmitted is scrambled through a specific scrambling code which may be, for example, recorded as san NAICS-RNTI or an ICS-RNTI or an SIC-RNTI.

Wherein, a method for downlink transmission parameter configuration on each resource allocation unit of the second access node is shown in Fig. 14. In Fig. 14, it is supposed that a downlink transmission parameter configuration includes: indication information indicating whether there exists second UE or not, TM information of the second UE and downlink transmission parameter configuration information of the second UE, and it is important to note that the downlink transmission parameter indication information may include merely at least one of the parameters during a practical application. In such a schematic manner, the downlink transmission parameter configuration on each resource allocation unit is indicated by 1+x+y bits, wherein 1 bit (such as (1) in the figure) is used for indicating whether there is the second UE in the resource allocation unit or not; x bit (such as (2) in the figure) is used for indicating the TM information of the second UE in the resource allocation unit, and whether the indicator exists or not depends on a value of (1); and y bit (such as (3) in the figure) is used for indicating a specific downlink transmission parameter configuration in the resource allocation unit, whether the indicator exists or not also depends on the value of (1), and when the indicator exists, a parameter in the indicator depends on a value of (2). For example, when the value of (1) indicates that there is no second UE on the current resource allocation unit, downlink parameter indication signaling corresponding to the resource allocation unit does not include signaling used for indicating "the TM information" and/or "the downlink transmission parameter configuration information", that is, both x and y are equal to 0; otherwise, when the value of (1) indicates that there is second UE on the current resource allocation unit, the downlink parameter indication signaling corresponding to the resource allocation unit includes the signaling used for indicating "the TM information" and/or "the downlink transmission parameter configuration information", that is, at least one of x and y is unequal to 0.

For the latter condition, information content in "the downlink transmission parameter configuration information" is determined by a value of "the TM information", and for example:
when the TM information indicates TM1 or TM2, the downlink transmission parameter configuration information includes at least one of the following information of the current resource allocation unit: MCS information and starting position information of the PDSCH;
when the TM information indicates TM3, the downlink transmission parameter configuration information includes at least one of the following information of the current resource allocation unit: the MCS information, an NZP-CSI-RS configuration, a ZP-CSI-RS configuration, resource index information of the current resource allocation unit relative to interference UE and the starting position information of the PDSCH;
when the TM information indicates TM4 or TM6, the downlink transmission parameter configuration information includes at least one of the following information of the current resource allocation unit: RI information, PMI information, the starting position information of the PDSCH and the MCS information;
when the TM information indicates TM5, the downlink transmission parameter configuration information includes at least one of the following information of the current resource allocation unit: indication information indicating the number of multiplexing UEs, the RI information, first PMI information, second PMI information, the starting position information of the PDSCH and the MCS information, wherein, when the indication information indicating the number of multiplexing UEs is 1 or the RI information is 1, the second PMI information is invalid;
when the TM information indicates TM7, the downlink transmission parameter configuration information includes at least one of the following information of the current resource allocation unit: the starting position information of the PDSCH, the MCS information and ID information of the second UE of the current resource allocation unit; and
when the TM information indicates TM8/9/10, the downlink transmission parameter configuration information includes at least one of the following information of the current resource allocation unit: the number of DMRS ports and port indication information, the starting position information of the PDSCH, the MCS information and DMRS initialization parameter information (scrambling code ID information and ID information of a virtual cell).

A serving cell notifies cell ID information and/or related cell parameter configuration information of an interference cell to victim UE through an RRC or an MAC signaling, wherein the cell parameter configuration information includes at least one of the following information: CRS parameter configuration information (for example, antenna port number information) corresponding to an interference source, CP type information, difference information of sequence numbers of subframes, configuration information of MBSFN subframes, configuration information of uplink/downlink subframes and configuration information of a special subframe. Wherein, the difference information of sequence numbers of subframes refers to subframe synchronization error information of the second access node relative to a first access node.

UE receives the cell ID information through UE-specific signaling, receives downlink grant control signaling corresponding to a specific CRC scrambling code in a control region of a cell indicated by the cell ID information, and receives, on the basis of the downlink grant control signaling, the downlink transmission parameter indication information on each resource allocation unit corresponding to the second access node on a service channel of the cell indicated by the cell ID indication information.

The UE performs interference suppression/cancellation processing on the basis of the received downlink transmission parameter indication information on each resource allocation unit of the interference cell.

### Example 5

A second access node transmits downlink transmission parameter indication information of the second access node through a PDSCH, and sends, through a common search space or UE-specific search space in a control region of the second access node, downlink control signaling used for scheduling the PDSCH.

Wherein, the downlink transmission parameter indication information is configured on the basis of each resource allocation unit respectively.

Wherein, a CRC of downlink grant control signaling for a downlink grant corresponding to the PDSCH through which the downlink transmission parameter indication information on each resource allocation unit of the second access node is transmitted is scrambled through a specific scrambling code which may be, for example, recorded as san NAICS-RNTI or an ICS-RNTI or an SIC-RNTI.

Wherein, a method for downlink transmission parameter configuration on each resource allocation unit of the second access node is shown in Fig. 14. In Fig. 14, it is supposed that a downlink transmission parameter configuration includes: indication information indicating whether there is second UE or not, TM information of the second UE and downlink transmission parameter configuration information of the second UE, and it is important to note that the downlink transmission parameter indication information may include merely at least one of the parameters during a practical application. In such a schematic manner, the downlink transmission parameter configuration on each resource allocation unit is indicated by 1+x+y bits, wherein 1 bit (such as (1) in the figure) is used for indicating whether there is second UE in the resource allocation unit or not; x bit (such as (2) in the figure) is used for indicating the TM information of the second UE in the resource allocation unit, and whether the indicator exists or not depends on a value of (1); and y bit (such as (3) in the figure) is used for indicating a specific downlink transmission parameter configuration in the resource allocation unit, whether the indicator exists or not also depends on the value of (1), and when the indicator exists, a parameter in the indicator depends on a value of (2). For example, when the value of (1) indicates that there is no second UE on the current resource allocation unit, downlink parameter indication signaling corresponding to the resource allocation unit does not include signaling used for indicating "the TM information" and/or "the downlink transmission parameter configuration information", that is, both x and y are equal to 0; otherwise, when the value of (1) indicates that there is second UE on the current resource allocation unit, the downlink parameter indication signaling corresponding to the resource allocation unit includes the signaling used for indicating "the TM information" and/or "the downlink transmission parameter configuration information", that is, at least one of x and y is unequal to 0.

For the latter condition, information content in "the downlink transmission parameter configuration information" is determined by a value of "the TM information", and for example:
when the TM information indicates TM1 or TM2, the downlink transmission parameter configuration information includes at least one of the following information of the current resource allocation unit: MCS information and starting position information of the PDSCH;
when the TM information indicates TM3, the downlink transmission parameter configuration information includes at least one of the following information of the current resource allocation unit: the MCS information, an NZP-CSI-RS configuration, a ZP-CSI-RS configuration, resource index information of the current resource allocation unit relative to interference UE and the starting position information of the PDSCH;
when the TM information indicates TM4 or TM6, the downlink transmission parameter configuration information includes at least one of the following information of the current resource allocation unit: RI information, PMI information, the starting position information of the PDSCH and the MCS information;
when the TM information indicates TM5, the downlink transmission parameter configuration information includes at least one of the following information of the current resource allocation unit: indication information indicating the number of multiplexing UEs, the RI information, first PMI information, second PMI information, the starting position information of the PDSCH and the MCS information, wherein, when the indication information indicating the number of multiplexing UEs is 1 or the RI information is 1, the second PMI information is invalid;
when the TM information indicates TM7, the downlink transmission parameter configuration information includes at least one of the following information of the current resource allocation unit: the starting position information of the PDSCH, the MCS information and ID information of the second UE of the current resource allocation unit; and
when the TM information indicates TM8/9/10, the downlink transmission parameter configuration information includes at least one of the following information of the current resource allocation unit: the number of DMRS ports and port indication information, the starting position information of the PDSCH, the MCS information and DMRS initialization parameter information (scrambling code ID information and ID information of a virtual cell).

A serving cell notifies cell ID information and/or related cell parameter configuration information of an interference cell to victim UE through UE-specific RRC signaling, wherein the cell parameter configuration information includes at least one of the following information: CRS parameter configuration information (for example, information indicating the number of antenna ports) corresponding to an interference source, CP type information, difference information of sequence numbers of subframes, configuration information of MBSFN subframes, configuration information of uplink/downlink subframes and configuration information of a special subframe. Wherein, the difference information of sequence numbers of subframes refers to subframe synchronization error information of the second access node relative to a first access node.

The serving cell does not send any data at local time-frequency resource position corresponding to a time-frequency resource position where the second node sends the PDSCH.

UE receives the cell ID information through UE-specific signaling, receives downlink grant control signaling corresponding to a specific CRC scrambling code in a control region of a cell indicated by the cell ID information, and receives, on the basis of the downlink grant control signaling, the downlink transmission parameter indication information on each resource allocation unit corresponding to the second access node on a service channel of the cell indicated by the cell ID indication information.

The UE performs interference suppression/cancellation processing on the basis of the received downlink transmission parameter indication information on each resource allocation unit of the interference cell.

Obviously, those skilled in the art should know that each module or step of the present disclosure may be implemented by a universal computing device, and the modules or steps may be concentrated on a single computing device or distributed on a network formed by a plurality of computing devices, and may optionally be implemented by programmable codes executable for the computing devices, so that the modules or steps may be stored in a storage device for execution with the computing devices, and the shown or described steps may be executed in a sequence different from a sequence described here under some circumstances, or the modules or steps may form each integrated circuit module respectively, or multiple modules or steps therein may form a single integrated circuit module for implementation. As a consequence, the present disclosure is not limited to any specific hardware and software combination.

The above is only the preferred embodiment of the present disclosure and not intended to limit the present disclosure, and for those skilled in the art, the present disclosure may have various modifications and variations within the scope of the appended claims.

### Industrial Applicability

From the above, the interference processing method and device, network control unit and UE provided by the embodiment of the present disclosure have the following beneficial effects: the problems of high signaling overhead and great delay during acquisition of IC information, required by an advanced receiver, of victim UE in the related technology are solved, and the effects of reducing signaling overhead and improving system performance are further achieved.

## Claims

1. A method for processing interference, comprising:
sending downlink transmission parameter indication information of a second User Equipment, UE, to a first UE through a Physical Downlink Shared Channel, PDSCH, wherein the second UE belongs to a second access node (S202), and the first UE, which belongs to the first access node, performs Interference Cancellation, IC, processing according to the received downlink transmission parameter indication information (S204);
wherein sending the downlink transmission parameter indication information of the second UE to the first UE through the PDSCH (S202), comprises: sending the downlink transmission parameter indication information to the first UE in a manner of bearing the downlink transmission parameter indication information of the second UE in a Radio Resource Control, RRC, signaling in the PDSCH of the first access node, and the method is **characterized in that**:
a scrambling code used for representing the execution of IC is adopted to scramble the PDSCH of the first access node

2. The method as claimed in claim 1, wherein the downlink transmission parameter indication information comprises:
Transmission Mode, TM, information of the second UE and downlink transmission parameter configuration information of the second UE.

3. The method as claimed in claim 2, wherein the downlink transmission parameter configuration information is determined according to the TM information of the second UE, wherein the downlink transmission parameter configuration information is determined according to the TM information of the second UE comprises:
when the TM information indicates TM1 or TM2, the downlink transmission parameter configuration information comprises: Energy Per Resource Element, EPRE, information of a Common Reference Signal, CRS;
when the TM information indicates TM3, the downlink transmission parameter configuration information comprises: the EPRE information of the CRS;
when the TM information indicates TM4 or TM6, the downlink transmission parameter configuration information comprises: the EPRE information of the CRS;
when the TM information indicates TM8/TM9/TM10, the downlink transmission parameter configuration information comprises: the EPRE information of the CRS in the non-MBSFN subframe.

4. The method as claimed in claim 1, wherein
when the first access node sends the downlink transmission parameter indication information to the first UE through the PDSCH of the first access node, the first access node adds corresponding cell ID indication information to the downlink transmission parameter indication information.

5. The method as claimed in any one of claims 1 to 4, wherein the downlink transmission parameter indication information further comprises:
cell ID indication information of the second access node and following CRS parameter information corresponding to the second access node: information of the number of antenna ports, configuration information of MBSFN subframes.

6. A method for processing interference, comprising:
receiving, by a first User Equipment, UE, which belong to a first access node, downlink transmission parameter indication information of a second UE, sent by a network side through a Physical Downlink Shared Channel, PDSCH, wherein the second UE belongs to a second access node (S202); and
performing Interference Cancellation, IC, processing, by the first UE, according to the received downlink transmission parameter indication information (S204);
wherein receiving the downlink transmission parameter indication information, sent by the network side through the PDSCH, of the second UE of the second access node (S202) comprises: receiving the downlink transmission parameter indication information sent by the network side in a manner of bearing the downlink transmission parameter indication information of the second UE of the second access node in a Radio Resource Control, RRC, signaling in the PDSCH of the first access node, and the method is **characterized in that**:
receiving the downlink transmission parameter indication information sent by the network side further comprises: receiving the downlink transmission parameter indication information sent by the network side in a manner of adopting
a scrambling code used for representing the execution of IC to scramble the PDSCH of the first access node.

7. The method as claimed in claim 6, wherein the downlink transmission parameter indication information comprises:
Transmission Mode, TM, information of the second UE and downlink transmission parameter configuration information of the second UE.

8. The method as claimed in claim 7, wherein the downlink transmission parameter configuration information is determined according to the TM information of the second UE, wherein the downlink transmission parameter configuration information is determined according to the TM information of the second UE comprises:
when the TM information indicates TM1 or TM2, the downlink transmission parameter configuration information comprises Energy Per Resource Element, EPRE, information of a Common Reference Signal, CRS;
when the TM information indicates TM3, the downlink transmission parameter configuration information comprises the EPRE information of the CRS;
when the TM information indicates TM4 or TM6, the downlink transmission parameter configuration information comprises: the EPRE information of the CRS;
when the TM information indicates TM8/TM9/TM10, the downlink transmission parameter configuration information comprises: the EPRE information of the CRS in the non-MBSFN subframe.

9. The method as claimed in any one of claims 6 to 8, wherein the downlink transmission parameter indication information further comprises:
cell ID indication information of the second access node and following CRS parameter information corresponding to the second access node: information of the number of antenna ports, configuration information of MBSFN subframes.

10. A device for processing interference (30), comprising:
a sending component (32), configured to send downlink transmission parameter indication information of a second User Equipment, UE, to a first UE through a Physical Downlink Shared Channel, PDSCH, wherein the second UE belongs to a second access node, and the first UE, which belongs to the first access node, performs Interference Cancellation, IC, processing according to the received downlink transmission parameter indication information;
wherein the sending component (32) comprises: a first sending element (42), configured to send the downlink transmission parameter indication information to the first UE in a manner of bearing the downlink transmission parameter indication information of the second UE in a Radio Resource Control, RRC, signaling in the PDSCH of the first access node, **characterized in that** the sending element is further configured to adopt a scrambling code used for representing the execution of IC to scramble the PDSCH of the first access node.

11. A network control unit (60), comprising the device as claimed in claim 10.

12. A first User Equipment, UE, for processing interference (30), comprising:
a receiving component (72), configured to receive downlink transmission parameter indication information of a second UE, sent by a network side through a Physical Downlink Shared Channel, PDSCH, wherein the second UE belongs to a second access node and the first UE belongs to the first access node; and
a processing component (74), configured to perform Interference Cancellation, IC, processing according to the received downlink transmission parameter indication information;
wherein the receiving component (72) comprises: a first receiving element (82), configured to receive the downlink transmission parameter indication information sent by the network side in a manner of bearing the downlink transmission parameter indication information of the second UE of the second access node in a Radio Resource Control, RRC, signaling in the PDSCH of the first access node,
**characterized in that** the first receiving element is further configured to receive the downlink transmission parameter indication information sent by the network side in a manner of adopting a scrambling code used for representing the execution of IC to scramble the PDSCH of the first access node.

13. The first UE as claimed in claim 12, wherein the receiving component (72) comprises:
an acquiring element (102), configured to acquire cell Identity, ID, indication information of the second UE of the second access node;
a fourth receiving element (104), configured to receive downlink grant control signaling used for scheduling the PDSCH in the downlink control channel region of a cell indicated by the cell ID indication information, wherein the PDSCH is used for transmitting the downlink transmission parameter configuration information; and
a fifth receiving element (106), configured to receive the downlink transmission parameter indication information on the PDSCH scheduled by the downlink grant control signaling.

## Patentansprüche

1. Verfahren zum Verarbeiten von Interferenzen, umfassend:
Senden von Downlink-Übertragungsparameteranzeigeinformationen einer zweiten Benutzereinrichtung, UE, an eine erste UE durch einen gemeinsam genutzten physikalischen Downlink-Kanal, PDSCH, wobei die zweite UE zu einem zweiten Zugangsknoten (S202) gehört und die erste UE, die zu dem ersten Zugangsknoten gehört, eine Interferenzunterdrückungs, IC, -Verarbeitung gemäß den empfangenen Downlink-Übertragungsparameteranzeigeinformationen (S204) durchführt;
wobei ein Senden der Downlink-Übertragungsparameteranzeigeinformationen der zweiten UE an die erste UE durch den PDSCH (S202) umfasst: Senden der Downlink-Übertragungsparameteranzeigeinformationen an die erste UE auf eine Weise zum Tragen der Downlink-Übertragungsparameteranzeigeinformationen der zweiten UE in einer Funkressourcensteuerungs, RRC, -Signalisierung, in dem PDSCH des ersten Zugangsknotens, und das Verfahren **dadurch gekennzeichnet ist, dass**:
ein Verschlüsselungscode, der zum Darstellen der Ausführung der IC verwendet wird, angewendet wird, um den PDSCH des ersten Zugangsknotens zu verschlüsseln.

2. Verfahren nach Anspruch 1,
wobei die Downlink-Übertragungsparameteranzeigeinformationen umfassen:
Übertragungsmodus, TM, -Informationen der zweiten UE und Downlink-Übertragungsparameterkonfigurationsinformationen der zweiten UE.

3. Verfahren nach Anspruch 2, wobei die Downlink-Übertragungsparameterkonfigurationsinformationen gemäß den TM-Informationen der zweiten UE bestimmt werden, wobei die Downlink-Übertragungsparameterkonfigurationsinformationen gemäß den TM-Informationen der zweiten UE bestimmt werden umfasst:
wenn die TM-Informationen TM1 oder TM2 anzeigen, dann umfassen die Downlink-Übertragungsparameterkonfigurationsinformationen: Energie pro-Ressourcenelement, EPRE, -Informationen eines gemeinsamen Referenzsignals, CRS;
wenn die TM-Informationen TM3 anzeigen, dann umfassen die Downlink-Übertragungsparameterkonfigurationsinformationen: die EPRE-Informationen des CRS;
wenn die TM-Informationen TM4 oder TM6 anzeigen, dann umfassen die Downlink-Übertragungsparameterkonfigurationsinformationen: die EPRE-Informationen des CRS;
wenn die TM-Informationen TM8/TM9/TM10 anzeigen, dann umfassen die Downlink-Übertragungsparameterkonfigurationsinformationen: die EPRE-Informationen des CRS in dem Nicht-MBSFN-Unterrahmen.

4. Verfahren nach Anspruch 1, wobei
wenn der erste Zugangsknoten die Downlink-Übertragungsparameteranzeigeinformationen durch den PDSCH des ersten Zugangsknotens an die erste UE sendet, dann fügt der erste Zugangsknoten entsprechende Zell-ID-Anzeigeinformationen zu den Downlink-Übertragungsparameteranzeigeinformationen hinzu.

5. Verfahren nach einem der Ansprüche 1 bis 4, wobei die Downlink-Übertragungsparameteranzeigeinformationen ferner umfassen:
Zell-ID-Anzeigeinformationen des zweiten Zugangsknotens und folgende CRS-Parameterinformationen, die dem zweiten Zugangsknoten entsprechen:
Informationen von der Anzahl von Antennenanschlüssen,
Konfigurationsinformationen von MBSFN-Unterrahmen.

6. Verfahren zum Verarbeiten von Interferenzen, umfassend:
Empfangen, durch eine erste Benutzereinrichtung, UE, die zu einem ersten Zugangsknoten gehört, von Downlink-Übertragungsparameteranzeigeinformationen einer zweiten UE, die von einer Netzwerkseite durch einen gemeinsam genutzten physikalischen Downlink-Kanal, PDSCH, gesendet werden, wobei die zweite UE zu einem zweiten Zugangsknoten (S202) gehört; und
Durchführen der Interferenzunterdrückungs, IC, -Verarbeitung, von der ersten UE, gemäß den empfangenen Downlink-Übertragungsparameteranzeigeinformationen (S204);
wobei ein Empfangen der Downlink-Übertragungsparameteranzeigeinformationen, die von der Netzwerkseite durch den PDSCH gesendet werden, der zweiten UE des zweiten Zugangsknotens (S202) umfasst: Empfangen der Downlink-Übertragungsparameteranzeigeinformationen, die von der Netzwerkseite gesendet werden, auf eine Weise zum Tragen der Downlink-Übertragungsparameteranzeigeinformationen der zweiten UE des zweiten Zugangsknotens in einer Funkressourcensteuerungs, RRC, -Signalisierung, in dem PDSCH des ersten Zugangsknotens, und das Verfahren
**dadurch gekennzeichnet ist, dass:**
das Empfangen der Downlink-Übertragungsparameteranzeigeinformationen, die von der Netzwerkseite gesendet werden, ferner umfasst: Empfangen der Downlink-Übertragungsparameteranzeigeinformationen, die von der Netzwerkseite gesendet werden, auf eine Weise zum Anwenden eines Verschlüsselungscodes, der zum Darstellen der Ausführung der IC verwendet wird, um den PDSCH des ersten Zugangsknotens zu verschlüsseln.

7. Verfahren nach Anspruch 6, wobei die Downlink-Übertragungsparameteranzeigeinformationen umfassen:
Übertragungsmodus, TM, -Informationen der zweiten UE und Downlink-Übertragungsparameterkonfigurationsinformationen der zweiten UE.

8. Verfahren nach Anspruch 7, wobei die Downlink-Übertragungsparameterkonfigurationsinformationen gemäß den TM-Informationen der zweiten UE bestimmt werden, wobei die Downlink-Übertragungsparameterkonfigurationsinformationen gemäß den TM-Informationen der zweiten UE bestimmt werden umfasst:
wenn die TM-Informationen TM1 oder TM2 anzeigen, dann umfassen die Downlink-Übertragungsparameterkonfigurationsinformationen Energie-pro-Ressourcenelement, EPRE, -Informationen eines gemeinsamen Referenzsignals, CRS;
wenn die TM-Informationen TM3 anzeigen, dann umfassen die Downlink-Übertragungsparameterkonfigurationsinformationen die EPRE-Informationen des CRS;
wenn die TM-Informationen TM4 oder TM6 anzeigen, dann umfassen die Downlink-Übertragungsparameterkonfigurationsinformationen: die EPRE-Informationen des CRS;
wenn die TM-Informationen TM8/TM9/TM10 anzeigen, dann umfassen die Downlink-Übertragungsparameterkonfigurationsinformationen: die EPRE-Informationen des CRS in dem Nicht-MBSFN-Unterrahmen.

9. Verfahren nach einem der Ansprüche 6 bis 8, wobei die Downlink-Übertragungsparameteranzeigeinformationen ferner umfassen:
Zell-ID-Anzeigeinformationen des zweiten Zugangsknotens und folgende CRS-Parameterinformationen, die dem zweiten Zugangsknoten entsprechen:
Informationen von der Anzahl von Antennenanschlüssen,
Konfigurationsinformationen von MBSFN-Unterrahmen.

10. Vorrichtung zum Verarbeiten von Interferenzen (30), umfassend:
eine Sendekomponente (32), die konfiguriert ist, um Downlink-Übertragungsparameteranzeigeinformationen einer zweiten Benutzereinrichtung, UE, an eine erste UE durch einen gemeinsam genutzten physikalischen Downlink-Kanal, PDSCH, zu senden, wobei die zweite UE zu einem zweiten Zugangsknoten gehört und die erste UE, die zu dem ersten Zugangsknoten gehört, die Interferenzunterdrückungs, IC, -Verarbeitung gemäß den empfangenen Downlink-Übertragungsparameteranzeigeinformationen durchführt;
wobei die Sendekomponente (32) umfasst: ein erstes Sendeelement (42), das konfiguriert ist, um die Downlink-Übertragungsparameteranzeigeinformationen an die erste UE auf eine Weise zum Tragen der Downlink-Übertragungsparameteranzeigeinformationen der zweiten UE in einer Funkressourcensteuerungs, RRC, -Signalisierung, in dem PDSCH des ersten Zugangsknotens zu senden, **dadurch gekennzeichnet, dass** das Sendeelement ferner konfiguriert ist, um einen Verschlüsselungscode, der zum Darstellen der Ausführung der IC verwendet wird, anzuwenden, um den PDSCH des ersten Zugangsknotens zu verschlüsseln.

11. Netzwerksteuerungseinheit (60), umfassend die Vorrichtung nach Anspruch 10.

12. Erste Benutzereinrichtung, UE, zum Verarbeiten von Interferenzen (30), umfassend:
eine Empfangskomponente (72), die konfiguriert ist, um Downlink-Übertragungsparameteranzeigeinformationen einer zweiten UE, die von einer Netzwerkseite durch einen gemeinsam genutzten physikalischen Downlink-Kanal, PDSCH, gesendet werden, zu empfangen, wobei die zweite UE zu einem zweiten Zugangsknoten gehört und die erste UE zu dem ersten Zugangsknoten gehört; und
eine Verarbeitungskomponente (74), die konfiguriert ist, um die Interferenzunterdrückungs, IC, -Verarbeitung gemäß den empfangenen Downlink-Übertragungsparameteranzeigeinformationen durchzuführen;
wobei die Empfangskomponente (72) umfasst: ein erstes Empfangselement (82), das konfiguriert ist, um die Downlink-Übertragungsparameteranzeigeinformationen, die von der Netzwerkseite gesendet werden, auf eine Weise zum Tragen der Downlink-Übertragungsparameteranzeigeinformationen der zweiten UE des zweiten Zugangsknotens in einer Funkressourcensteuerungs, RRC, -Signalisierung, in dem PDSCH des ersten Zugangsknotens zu empfangen,
**dadurch gekennzeichnet, dass** das erste Empfangselement ferner konfiguriert ist, um die Downlink-Übertragungsparameteranzeigeinformationen, die von der Netzwerkseite gesendet werden, auf eine Weise zum Anwenden eines Verschlüsselungscodes, der zum Darstellen der Ausführung der IC verwendet wird, zu empfangen, um den PDSCH des ersten Zugangsknotens zu verschlüsseln.

13. Erste UE nach Anspruch 12, wobei die Empfangskomponente (72) umfasst:
ein Erfassungselement (102), das konfiguriert ist, um Zellenidentifikations, ID, -Anzeigeinformationen der zweiten UE des zweiten Zugangsknotens zu erfassen;
ein viertes Empfangselement (104), das konfiguriert ist, um eine Downlink-Steuerungsgewährungssignalisierung zu empfangen, die zum Planen des PDSCH in der Downlink-Steuerungskanalregion einer Zelle, die von den Zell-ID-Anzeigeinformationen angezeigt wird, verwendet wird, wobei der PDSCH zum Übertragen der Downlink-Übertragungsparameterkonfigurationsinformationen verwendet wird; und
ein fünftes Empfangselement (106), das konfiguriert ist, um die Downlink-Übertragungsparameteranzeigeinformationen an dem PDSCH, der von der Downlink-Steuerungsgewährungssignalisierung geplant wird, zu empfangen.

## Revendications

1. Procédé de traitement d'interférence, comprenant :
l'envoi d'informations d'indication de paramètre de transmission en liaison descendante d'un second équipement utilisateur, UE, à un premier UE par l'intermédiaire d'un canal partagé de liaison descendante physique, PDSCH, dans lequel le second UE appartient à un second nœud d'accès (S202), et le premier UE, qui appartient au premier nœud d'accès, effectue un traitement d'annulation d'interférence, IC, selon les informations d'indication de paramètre de transmission en liaison descendante reçues (S204) ;
dans lequel l'envoi des informations d'indication de paramètre de transmission en liaison descendante du second UE au premier UE par l'intermédiaire du PDSCH (S202), comprend : l'envoi des informations d'indication de paramètre de transmission en liaison descendante au premier UE d'une manière à porter les informations d'indication de paramètre de transmission en liaison descendante du second UE dans une signalisation de commande de ressource radio, RRC, dans le PDSCH du premier nœud d'accès, et le procédé est **caractérisé en ce que** :
un code de brouillage utilisé pour représenter l'exécution d'IC est adopté pour brouiller le PDSCH du premier nœud d'accès

2. Procédé tel que revendiqué dans la revendication 1,
dans lequel les informations d'indication de paramètre de transmission en liaison descendante comprennent :
des informations de mode de transmission, TM, du second UE et des informations de configuration de paramètre de transmission en liaison descendante du second UE.

3. Procédé tel que revendiqué dans la revendication 2, dans lequel les informations de configuration de paramètre de transmission en liaison descendante sont déterminées selon les informations TM du second UE, dans lequel les informations de configuration de paramètre de transmission en liaison descendante qui sont déterminées selon les informations TM du second UE comprennent :
lorsque les informations TM indiquent TM1 ou TM2, les informations de configuration de paramètre de transmission en liaison descendante comprennent : des informations d'énergie par élément de ressource, EPRE, d'un signal de référence commun, CRS ;
lorsque les informations TM indiquent TM3, les informations de configuration de paramètre de transmission en liaison descendante comprennent : les informations EPRE du CRS ;
lorsque les informations TM indiquent TM4 ou TM6, les informations de configuration de paramètre de transmission en liaison descendante comprennent : les informations EPRE du CRS ;
lorsque les informations TM indiquent TM8/TM9/TM10, les informations de configuration de paramètre de transmission en liaison descendante comprennent : les informations EPRE du CRS dans la sous-trame non-MBSFN.

4. Procédé tel que revendiqué dans la revendication 1, dans lequel
lorsque le premier nœud d'accès envoie les informations d'indication de paramètre de transmission en liaison descendante au premier UE par l'intermédiaire du PDSCH du premier nœud d'accès, le premier nœud d'accès ajoute des informations d'indication d'ID de cellule correspondantes aux informations d'indication de paramètre de transmission en liaison descendante.

5. Procédé tel que revendiqué dans l'une quelconque des revendications 1 à 4, dans lequel les informations d'indication de paramètre de transmission en liaison descendante comprennent en outre :
des informations d'indication d'ID de cellule du second nœud d'accès et des informations de paramètre CRS suivantes correspondant au second nœud d'accès : des informations du nombre de ports d'antenne, des informations de configuration de sous-trames MBSFN.

6. Procédé de traitement d'interférence, comprenant :
la réception, par un premier équipement utilisateur, UE, qui appartient à un premier nœud d'accès, d'informations d'indication de paramètre de transmission en liaison descendante d'un second UE, envoyées par un côté réseau par l'intermédiaire d'un canal partagé de liaison descendante physique, PDSCH, dans lequel le second UE appartient à un second nœud d'accès (S202) ; et
le fait d'effectuer un traitement d'annulation d'interférence, IC, par le premier UE, selon les informations d'indication de paramètre de transmission en liaison descendante reçues (S204) ;
dans lequel la réception des informations d'indication de paramètre de transmission en liaison descendante, envoyées par le côté réseau par l'intermédiaire du PDSCH, du second UE du second nœud d'accès (S202) comprend : la réception des informations d'indication de paramètre de transmission en liaison descendante envoyées par le côté réseau d'une manière à porter les informations d'indication de paramètre de transmission en liaison descendante du second UE du second nœud d'accès dans une signalisation de commande de ressource radio, RRC, dans le PDSCH du premier nœud d'accès et le procédé est **caractérisé en ce que** :
la réception des informations d'indication de paramètre de transmission en liaison descendante envoyées par le côté réseau comprend en outre : la réception des informations d'indication de paramètre de transmission en liaison descendante envoyées par le côté réseau d'une manière à adopter un code de brouillage utilisé pour représenter l'exécution d'IC pour brouiller le PDSCH du premier nœud d'accès.

7. Procédé tel que revendiqué dans la revendication 6, dans lequel les informations d'indication de paramètre de transmission en liaison descendante comprennent :
des informations de mode de transmission, TM, du second UE et des informations de configuration de paramètre de transmission en liaison descendante du second UE.

8. Procédé tel que revendiqué dans la revendication 7, dans lequel les informations de configuration de paramètre de transmission en liaison descendante sont déterminées selon les informations TM du second UE, dans lequel les informations de configuration de paramètre de transmission en liaison descendante qui sont déterminées selon les informations TM du second UE comprennent :
lorsque les informations TM indiquent TM1 ou TM2, les informations de configuration de paramètre de transmission en liaison descendante comprennent des informations d'énergie par élément de ressource, EPRE, d'un signal de référence commun, CRS ;
lorsque les informations TM indiquent TM3, les informations de configuration de paramètre de transmission en liaison descendante comprennent les informations EPRE du CRS ;
lorsque les informations TM indiquent TM4 ou TM6, les informations de configuration de paramètre de transmission en liaison descendante comprennent : les informations EPRE du CRS ;
lorsque les informations TM indiquent TM8/TM9/TM10, les informations de configuration de paramètre de transmission en liaison descendante comprennent : les informations EPRE du CRS dans la sous-trame non-MBSFN.

9. Procédé tel que revendiqué dans l'une quelconque des revendications 6 à 8, dans lequel les informations d'indication de paramètre de transmission en liaison descendante comprennent en outre :
des informations d'indication d'ID de cellule du second nœud d'accès et des informations de paramètre CRS suivantes correspondant au second nœud d'accès : des informations du nombre de ports d'antenne, des informations de configuration de sous-trames MBSFN.

10. Dispositif de traitement d'interférence (30), comprenant :
un composant d'envoi (32), configuré pour envoyer des informations d'indication de paramètre de transmission en liaison descendante d'un second équipement utilisateur, UE, à un premier UE par l'intermédiaire d'un canal partagé de liaison descendante physique, PDSCH, dans lequel le second UE appartient à un second nœud d'accès, et le premier UE, qui appartient au premier nœud d'accès, effectue un traitement d'annulation d'interférence, IC, selon les informations d'indication de paramètre de transmission en liaison descendante reçues ;
dans lequel le composant d'envoi (32) comprend : un premier élément d'envoi (42), configuré pour envoyer les informations d'indication de paramètre de transmission en liaison descendante au premier UE d'une manière à porter les informations d'indication de paramètre de transmission en liaison descendante du second UE dans une signalisation de commande de ressource radio, RRC, dans le PDSCH du premier nœud d'accès, **caractérisé en ce que** l'élément d'envoi est configuré en outre pour adopter un code de brouillage utilisé pour représenter l'exécution d'IC pour brouiller le PDSCH du premier nœud d'accès.

11. Unité de commande de réseau (60), comprenant le dispositif tel que revendiqué dans la revendication 10.

12. Premier équipement utilisateur, UE, de traitement d'interférence (30), comprenant :
un composant de réception (72), configuré pour recevoir des informations d'indication de paramètre de transmission en liaison descendante d'un second UE, envoyées par un côté réseau par l'intermédiaire d'un canal partagé de liaison descendante physique, PDSCH, dans lequel le second UE appartient à un second nœud d'accès et le premier UE appartient au premier nœud d'accès ; et
un composant de traitement (74), configuré pour effectuer un traitement d'annulation d'interférence, IC, selon les informations d'indication de paramètre de transmission en liaison descendante reçues ;
dans lequel le composant de réception (72) comprend : un premier élément de réception (82), configuré pour recevoir les informations d'indication de paramètre de transmission en liaison descendante envoyées par le côté réseau d'une manière à porter les informations d'indication de paramètre de transmission en liaison descendante du second UE du second nœud d'accès dans une signalisation de commande de ressource radio, RRC, dans le PDSCH du premier nœud d'accès, **caractérisé en ce que** le premier élément de réception est configuré en outre pour recevoir les informations d'indication de paramètre de transmission en liaison descendante envoyées par le côté réseau d'une manière à adopter un code de brouillage utilisé pour représenter l'exécution d'IC pour brouiller le PDSCH du premier nœud d'accès.

13. Premier UE tel que revendiqué dans la revendication 12, dans lequel le composant de réception (72) comprend :
un élément d'acquisition (102), configuré pour acquérir des informations d'indication d'identité de cellule, ID, du second UE du second nœud d'accès ;
un quatrième élément de réception (104), configuré pour recevoir une signalisation de commande d'autorisation de liaison descendante utilisée pour planifier le PDSCH dans la région de canal de commande de liaison descendante d'une cellule indiquée par les informations d'indication d'ID de cellule, dans lequel le PDSCH est utilisé pour transmettre les informations de configuration de paramètre de transmission en liaison descendante ; et
un cinquième élément de réception (106), configuré pour recevoir les informations d'indication de paramètre de transmission en liaison descendante sur le PDSCH planifié par la signalisation de commande d'autorisation de liaison descendante.
